Europäisches Patentamt

European Patent Office

Office européen des brevets

(11) Veröffentlichungsnummer: **0 358 110**
**A2**

## (12) EUROPÄISCHE PATENTANMELDUNG

(21) Anmeldenummer: 89116082.2

(22) Anmeldetag: 31.08.89

(51) Int. Cl.5 **B01D 53/04 , B01D 53/22 , C01B 13/02**

(30) Priorität: 08.09.88 DE 3830538
17.09.88 DE 3831669
03.10.88 DE 3833582
11.01.89 DE 3900618

(43) Veröffentlichungstag der Anmeldung:
**14.03.90 Patentblatt 90/11**

(84) Benannte Vertragsstaaten:
**AT BE CH DE ES FR GB GR IT LI LU NL SE**

(71) Anmelder: **Rennebeck, Klaus**
**Blumenstrasse 16**
**D-7317 Wendlingen(DE)**

(72) Erfinder: **Rennebeck, Klaus**
**Blumenstrasse 16**
**D-7317 Wendlingen(DE)**

(74) Vertreter: **Patentanwälte RUFF, BEIER und**
**SCHÖNDORF**
**Neckarstrasse 50**
**D-7000 Stuttgart 1(DE)**

(54) **Verfahren und Einrichtung zur Behandlung, insbesondere Trennung von Gasgemischen.**

(57) Zur Aufbereitung mindestens eines Gases, zum Beispiel zur Trennung eines Gasgemisches in stofflich unterschiedliche Bestandteile, zur Abscheidung von Feststoffen, zur Temperierung, zur Be- oder Entfeuchtung o.dgl. wird das Gas durch wenigstens eine gebündelte Kanalanordnung (82) wenigstens eines Behandlungskörpers (71) geleitet, der ein Molekularsieb (98) und/oder eine Membran (99) aufweist bzw. bildet. Der Behandlungskörper (71) besteht im wesentlichen aus keramischem Werkstoff und kann als Wabenkörper durch Extrudieren oder ein anionisches Oxidationsverfahren hergestellt sein. Gesonderte Gasströme werden zweckmäßig entgegengesetzt gerichtet durch benachbarte Sektoren des Behandlungskörpers (71) geleitet, wobei der jeweilige Gasstrom auf dem zugehörigen Sektor nur in eine begrenzte Anzahl der vorhandenen Kanäle eingeleitet und aus den übrigen Kanälen wieder herausgeleitet wird, so daß er die Wandungen (97) zwischen diesen Kanälen wenigstens mit einem stofflichen Bestandteil durchströmen muß. Die Sektoren des Behandlungskörpers (71) werden laufend gegenüber den beiden Gasströmen verdreht, so daß alle Kanäle (95, 96) des Behandlungskörpers zur Regeneration abwechselnd in entgegengesetzten Richtungen durchströmt werden.

Fig.15

## Verfahren und Einrichtung zur Behandlung, insbesondere Trennung von Gasgemischen

Die Erfindung betrifft ein Verfahren zur Behandlung, insbesondere zur selektiven, teilweisen Trennung von Gasgemischen, insbesondere Luft, unter Verwendung eines Trennmittels, das an einem Träger vorgesehen sein bzw. diesen als Behandlungskörper bilden kann. Ferner betrifft die Erfindung eine Einrichtung zur Behandlung, Aufbereitung bzw. Trennung von Gasen, insbesondere zur Durchführung des Verfahrens.

Es ist bereits bekannt, daß durch geeignete Trennmaterialien Gasgemische getrennt und dadurch stoffliche Bestandteile dieser Gasgemische aufkonzentriert werden können. Diese Möglichkeit der Gastrennung ist besonders für die Anreicherung von Sauerstoff in Luft von Bedeutung, da die mit Sauerstoff angereicherte Luft bei verschiedenen Anwendungen vorteilhaft verwendet werden kann. So kann bei den verschiedensten Verbrennungssystemen eine effektive Verbrennung durchgeführt werden, was zu beträchtlichen Brennstoff- und Energieeinsparungen führen kann. Außerdem kann durch eine effektiv verlaufende Verbrennung die Umweltbeeinträchtigung durch die bei der Verbrennung entstehenden Abgase verringert werden. Die mit Sauerstoff angereicherte Luft kann auch für medizinische Zwecke, wie insbesondere Beatmungszwecke, verwendet werden. Die bisher bekannten Verfahren zur Trennung der Bestandteile von Luft, insbesondere zur Anreicherung von Sauerstoff in Frischluft, weisen den Nachteil auf, daß sie entweder nicht wirtschaftlich sind oder zu keinem befriedigenden Trennergebnis führen.

Die Erfindung stellt sich die Aufgabe, Nachteile bekannter Lösungen zu vermeiden, insbesondere ein Verfahren zur Trennung von Gasgemischen bzw. zur Lufttrennung zur Verfügung zu stellen, das eine hohe Trennleistung aufweist und wirtschaftlich ist. Weiterhin ist Aufgabe der Erfindung, mindestens eine Einrichtung zu schaffen, mit welcher auf einfache Weise Behandlungen von Gas bzw. Trennungen der genannten Art, ggf. das Verfahren, wirksam durchgeführt werden können.

Diese Aufgabe wird von der Erfindung gelöst, indem bei einem Verfahren zur selektiven Trennung von Gas-Bestandteilen wenigstens ein Bestandteil des Gasgemisches in bzw. durch mindestens eine gebündelte Kanalanordnung, insbesondere einen keramischen Wabenkörper bzw. Wandungen von begrenzter spezifischer Permeabilität und/oder Speicherfähigkeit geleitet wird. Die Oberflächen von Wandungen, die zweckmäßig mit dem Gasgemisch angeströmt werden, können mindestens teilweise mit einem Molekularsieb und/oder einer Membran aus einem organischen Polymeren versehen sein. Die Oberflächen können auch aus oxidischem oder keramischem Material bestehen, das vorzugsweise zugleich die Kanalwandung bildet. So kann die Oberfläche auch aus Alumosilikatmagnesium und/oder durch anodische Oxidation von Metallen gebildet sein. Im Falle eines Molekularsiebes können alle Bestandteile des Gasgemisches in die gebündelte Kanalanordnung geleitet werden. Einige Bestandteile werden wenigstens zum Teil in dem Molekularsieb aufgenommen bzw. zurückgehalten und weitere bzw. die übrigen Bestandteile können aus der gebündelten Kanalanordnung zur weiteren Verwendung herausgeleitet werden. Im Falle einer Membran kann statt dessen mindestens ein Bestandteil des Gasgemisches wenigstens teilweise vom Eindringen in die Kanalanordnung zurückgehalten werden, während andere Bestandteile die Membran durchdringen und dadurch wieder herausgeleitet werden. Die Kanalanordnung kann in diesem Fall durch eine entsprechend feine Porosität gebildet sein.

Bei einer vorteilhaften Verfahrensweise wird das Gasgemisch in eine erste Gruppe eines Rasters aus Kanälen eingeleitet, wonach mindestens ein Bestandteil des Gasgemisches innerhalb dieser Kanäle quer durch deren Wandungen in eine zweite Gruppe von im Raster angeordneten Kanälen geleitet wird, während mindestens ein weiterer Bestandteil entweder in den Wandungen adsorbiert bzw. absorbiert oder vom Eintritt in die Wandungen zurückgehalten wird. Die in die zweite Kanalgruppe gelangenden Bestandteile werden aus der Kanalanordnung entsprechend dem kontinuierlichen Durchfluß wieder herausgeleitet. Dadurch kann bei kompakter Ausbildung, geringen Strömungswiderständen, geringer Geräuschentwicklung und großen trennaktiven Oberflächen bzw. Querschnitten ein hoher Volumendurchsatz erzielt werden.

Die trennaktiven Oberflächen bzw. die Wandungen können sowohl im Falle eines Molekularsiebes als auch im Falle einer Membran vorteilhaft aus Keramik, zum Beispiel Cordierit, Steingut, Steinzeug, Ton, Porzellain, Bonnechina o.dgl. bestehen. Der keramische Werkstoff kann als Oberflächenbeschichtung, als Glasur bzw. Engobe o.dgl vorgesehen sein, wobei als Trägermaterial poröser Stahl, einer der genannten keramischen Werkstoffe o.dgl. vorgesehen sein kann. Auch können die Wandungen bzw. Kanalwandungen, ggf. beschichtungsfrei, über ihre gesamte Dicke aus einem als Molekularsieb bzw. als Absorptionsmaterial geeigneten Werkstoff bestehen. Ähnliches gilt auch im Falle der Ausbildung des Trennmittels als Gas-Trennmembran, wobei in diesem Fall zumindest die Wandungen der ersten Kanalgruppe im wesentlichen ganzflächig mit einer geeigneten Membranschicht abgedeckt sein können. Es ist aber auch denkbar, die trennaktive Membran an einer vom Gasgemisch angeströmten Außenseite des Trägers vorzusehen und ggf. einteilig mit diesem aus einem der genannten keramischen Werkstoffe herzustellen.

Bevorzugt ist die Ausführungsform, bei der das Molekularsieb und/oder die Membran eine höhere Permeabilität für Sauerstoff als für Stickstoff besitzt. Die Kanalanordnung bzw. der keramische Wabenkörper kann aus bekannten anorganischen, brennbaren (sinterbaren) oder nichtbrennbaren Mineralstoffen, insbesondere aus keramischen Materialien, wie beispielsweise Alumosilikaten, hergestellt sein. Solche Alumosilikate sind beispielsweise das genannte Cordierit oder Zeolithe. Die Kanalanordnung kann auch durchlässig ausgebildet und mit einer Membran versehen sein oder selbst als Membran ausgebildet sein. So können auf der Oberfläche des Wabenkörpers alle üblichen Molekularsiebe aufgebracht sein, wobei hier als Beispiele die Zeolithe genannt sind. Bei der Membran aus einem organischen Polymeren kann es sich beispielsweise um eine Gas-Trennmembran bzw. Folie aus einem Polymeren eines Crotonsäureesters handeln, wie sie in der DE-OS 35 41 011 beschrieben ist. Unter Kanalanordnung, Wabenkörper oder Träger ist ggf. jedes geeignete Behandlungs-bzw. Trennmittel für mindestens ein, insbesondere zwei im wesentlichen gesondert und ggf. wenigstens im Bereich eines Behandlungsmittels im Gegenstrom geleitete Gasgemische zu verstehen.

Durch das erfindungsgemäße Verfahren ist es auf einfache Weise möglich, die Bestandteile von Luft oder andere Gasgemische, wie Prozeßgas aus Verbrennung selektiv zu trennen. Insbesondere ist eine Anreicherung von Sauerstoff in Luft, insbesondere in atmosphärischer Frischluft, möglich. Die Anordnung des Molekularsiebs bzw. der Membran auf der inneren und/oder der äußeren, bei den Kanalenden liegenden Oberfläche der Kanalanordnung läßt eine besonders wirtschaftliche Arbeitsweise zu. Der Stickstoff kann weitgehend adsorptiv und/oder katalytisch ausgeschieden werden.

Wird eine Membran zur Gasgemisch-Trennung verwendet, so ist diese Membran zweckmäßig unter Erwärmen und durch Vakuum bzw. Gasdruck in die Waben des Wabenkörpers hineingezogen. Dieses Hineinsaugen der Membran kann durch Anlegen eines Unterdrucks an die der Membran gegenüberliegende Seite des Wabenkörpers erfolgen. Um zu verhindern, daß sich die Membran luftdicht an die Oberfläche des Wabenkörpers bzw. die innere Oberflächen der Kanäle anlegt und damit unter Umständen einen Gasdurchgang unmöglich macht, können diese Oberflächen strukturiert sein. Durch diese Strukturierung ist eine ausreichende Durchtrittsmöglichkeit für die Gase gewährleistet, weil zum Beispiel zwischen der Oberfläche und der Membran mindestens ein freier Spalt gebildet ist.

Der Wabenkörper selbst kann beispielsweise durch Extrusion des keramischen Materials hergestellt sein, wobei der extrudierte Wabenkörper anschließend auf die gewünschten Abmessungen abgelängt wird. Dabei ist es vorteilhaft, wenn das Ablängen des extrudierten Formkörpers durch Sägen unter Wasser erfolgt. Auf diese Weise treten keine gesundheitsschädlichen Stäube beim Sägen auf und es müssen keine zusätzlichen Sicherheitsvorkehrungen vorgesehen werden. Gleichzeitig werden die beim Sägen entstehenden Stäube beim Sägen unter Wasser gesammelt und können nach einer Trocknung wieder als Ausgangsmaterial für die Herstellung weiterer Wabenkörper verwendet werden.

Die Kanalanordnung kann aber auch in vorteilhafter Weise in einem anionischen Oxidationsverfahren hergestellt werden. Ein Bündel von metallischen Fasern aus Aluminium, Stahl o.dgl wird zweckmäßig oberflächig so oxidiert, daß ihre Oxidationsschichten Kanalwandungen bilden, wonach der metallische Kern durch Elektrolyse herausgelöst wird und dadurch die Kanäle strömungsdurchlässig werden. Es ist denkbar, benachbarte Kanalwandungen von Hohlfasern wenigstens teilweise als Doppelwandungen vorzusehen oder zum Beispiel den Oxidationsprozeß so durchzuführen, daß benachbarte Kanalwandungen wenigstens teilweise miteinander verwachsen, so daß sie zwischen benachbarten Kanälen eine einteilige Wandung bilden. In jedem Fall ergibt sich eine vorteilhafte Ausbildung, wenn die Kanalanordnung durch miteinander verbundene Hohlfasern gebildet ist, die sehr kleine, jedoch im Gegensatz zu einem streng regelmäßigen Wabenkörper nicht genau gleiche bzw. regelmäßige Innenquerschnitte haben können.

Es kann auch eine Gitterstruktur verwendet werden, die an der Oberfläche vorzugsweise beschichtet ist, so daß ein thermisch beständiger Wabenkörper entsteht, der als Stofftrenner und/oder Wärmetauscher geeignet ist. Eine Metall-Gitterstruktur kann durch Oxidation, insbesondere anodische Oxidation, vollständig in einen Oxidkörper umgewandelt werden, der durchlässig mikroporöse Wandungen hat. Dann haben metallische Wandungen, die zuvor aus Metall bestehen, die Eigenschaften von Membranen, die vorzugsweise selektiv durchlässig sind. Bevorzugte Metalle sind Eisen oder Aluminium, insbesondere in Form von Legierungen.

Eine bevorzugte Ausführungsform des erfindungsgemäßen Verfahrens liegt dann vor, wenn das Gasgemisch vor, während und/oder nach der Gastrennung bzw. einem Durchtritt durch eine Kanalanordnung entfeuchtet wird. Diese simultan im Durchfluß für die Gastrennung erfolgende Entfeuchtung kann insbesondere so durchgeführt werden, daß das Gasgemisch vor der Trennung durch eine weitere gebündelte Kanalanordnung o.dgl geleitet wird, die zum Beispiel an im wesentlichen allen Kanalwandungen ggf. ganzflächig mit einem geeigneten Trockenmittel beschichtet und/oder imprägniert ist. Gegebenenfalls enthält die Beschichtung und/oder Imprägnierung noch einen Binder, der zum Aufbringen des Trockenmittels auf die Kanalanordnung verwendet wurde. Geeignete Trockenmittel sind beispielsweise Phosphorpentoxid ($P_4O_{10}$) oder Magnesiumperchlorat ($Mg(ClO_4)_2$). Es können jedoch auch andere übliche Trockenmittel als Beschichtung bzw. Imprägnierung verwendet werden. Besonders bevorzugt ist die Verwendung von Phosphorpentoxid, da es eine sehr gute Trocknungswirkung und darüber hinaus eine fungizide und bakteriezide Wirkung besitzt. Zweckmäßigerweise wird Magnesiumperchlorat dann verwendet, wenn die Gastrennung bei höheren Temperaturen erfolgt, da Magnesiumperchlorat eine höhere Temperaturbeständigkeit aufweist.

Als Behandlungskörper bzw. Kanalanordnung können die obengenannten keramischen Träger verwendet werden. Zur Herstellung der Beschichtung bzw. Imprägnierung wird das Trockenmittel vorzugsweise in einer als Binder dienenden Silikonlösung aufgelöst bzw. suspendiert. Mit dieser Lösung bzw. Suspension wird der Behandlungskörper beschichtet, indem er beispielsweise in die Suspension bzw. Lösung getaucht wird. Mit der eben beschriebenen Methode ist auch eine Beschichtung bzw. Imprägnierung des Behandlungskörpers nach dessen Einbau in eine Behandlungs- bzw. Trenneinrichtung möglich. Zum Auf bringen bzw. Erneuern der Beschichtung wird dabei die Lösung bzw. Suspension des Trockenmittels in vorzugsweise Silikon auf den Behandlungskörper aufgedüst.

Eine Entfeuchtung des Gasgemisches vor der Trennung in ihre Bestandteile ist insbesondere dann zweckmäßig, wenn der Wassergehalt der Luft bzw. des Gasgemisches die Trenneigenschaften der Trennmaterialien negativ beeinflußt oder bei der weiteren Verwendung der getrennten Gasströme stört. Unter Umständen kann es jedoch auch zweckmäßig sein, das Gasgemisch vor oder nach mindestens einer Trennung zusätzlich zu befeuchten. Diese Befeuchtung kann beispielsweise mit Hilfe einer der beschriebenen Kanalanordnungen erfolgen, die mit einer Substanz beschichtet und/oder imprägniert ist, die entweder Wasser enthält oder unter den Bedingungen des Gasdurchtritts freisetzt.

Es ist weiter bevorzugt, wenn bei dem Verfahren das Gasgemisch vor und/oder nach mindestens einer Trennung bzw. vor und/oder nach einer Änderung seines Feuchtigkeitsgehaltes temperiert wird. Insbesondere wird das Verfahren so durchgeführt, daß eine Erwärmung der Luft bzw. eine Kühlung eines Abgases vor, während und/oder nach der Entfeuchtung vorgenommen wird. Die beiden Gasgemische können durch Wärmetausch untereinander bei geringer, von außen zugeführter Energie temperiert werden. Vorzugsweise wird Luft bei der Entfeuchtung erwärmt und das frei werdende Wasser zur Abführung in den Stickstoffstrom aufgenommen.

Das Verfahren kann so ausgestaltet sein, daß das Gasgemisch, insbesondere Luft, nach einer Gastrennung mindestens teilweise von im Gasstrom vorhandenem Kohlendioxid ($CO_2$) befreit wird. Dabei wird die Luft insbesondere durch eine Kanalanordnung der beschriebenen Art geleitet, die mit einem Molekularsieb und/oder mit einer Membran versehen ist, die speziell zur Abtrennung von Kohlendioxid geeignet sind. Die Abtrennung des im Gasstrom vorhandenem Kohlendioxids ist insbesondere dann zweckmäßig, wenn bei der anschließenden Verwendung der abgetrennten Luftbestandteile das Kohlendioxid stört. Viele Trennmaterialien haben nämlich die Eigenschaft, daß sie für Kohlendioxid eine sehr hohe Permeabilität besitzen. Dies bedeutet, daß beispielsweise für ein Trennmaterial zur Anreicherung von Sauerstoff in Luft eine ggf. noch größere Anreicherung mit Kohlendioxid im sauerstoffreichen Luftstrom erfolgt. Dieser hohe Kohlendioxidanteil kann beispielsweise für Atmungs-, Beatmungs-, Klimatisierzwecke o.dgl. unerwünscht sein, da er ggf. für den Patienten schädlich ist.

Bei anderen Anwendungszwecken, wie beispielsweise in Verbrennungssystemen, stört der Kohlendioxidgehalt des mit Sauerstoff angereicherten Luftstroms nicht. Er kann im Gegenteil sogar erwünscht sein, da er einerseits bei der Verbrennung nicht stört und keine zusätzlichen Abgasprobleme verursacht und andererseits beispielsweise bei einer Gasturbine beim Rückführen als Kältemittel im Ersatz für den abgetrennten Stickstoff dienen kann.

In Weiterbildung kann die Luft bzw. das Gasgemisch vor, während und/oder nach mindestens einer Gastrennung durch einen Wärmetauscher geleitet werden. Dabei dient als Wärmetauscher insbesondere eine Kanalanordnung der beschriebenen Art, die auch durch einen metallischen Gitterrost gebildet sein kann. Durch diesen Wärmetauscher kann beispielsweise die mit Sauerstoff angereicherte Luft erwärmt werden, bevor sie beispielsweise einem Verbrennungssystem zugeleitet wird. Zur Erwärmung kann dabei insbesondere der Abgasstrom des Verbrennungssystems dienen.

Mindestens eine der genannten oder weitere Behandlungen des Gasgemisches, zum Beispiel die Gasgemisch-Trennung, die Entfeuchtung, die Erwärmung, der Entzug von Kohlendioxid o.dgl.

kann auch dadurch erfolgen, daß das Gasgemisch durch ein durchlässiges Trikot, zum Beispiel einen Schlauch mit durchlässigen Wandungen geleitet wird, die wenigstens teilweise mit mindestens einem mehligen Behandlungsmittel besetzt sind. Dieses Behandlungsmittel kann auch fluidisiert bzw. im Schwebezustand im Gasstrom liegen und dadurch auf das Gasgemisch wirken, wobei bei geringen Strömungswiderständen adsorptive oder katalytische Effekte erreicht werden. Im Falle des fluidisierten Mehles wird der Träger praktisch durch den Gasstrom bzw. einen diesen aufnehmenden Kanalabschnitt gebildet.

In einer bevorzugten Ausführungsform wird die Luft nach mindestens einer Gasgemisch-Trennung, Entfeuchtung und/oder Erwärmung einem Verbrennungssystem zugeführt. Bei diesem Verbrennungssystem kann es sich um übliche industrielle und private Heizungen, Beleuchtungsbrenner o.dgl insbesondere aber auch um Gasturbinen bzw. Verbrennungsmotoren, wie Kolbenmotoren von Kraftfahrzeugen handeln. Insofern ist das Verfahren für mobile Geräte und stationäre Anlagen geeignet. Die im Stoffdreieck aus Kohlenstoff, Wasserstoff und Sauerstoff mit allen Begleitstoffen des periodischen Systems belasteten Bestandteile können vor Eintritt in den Brennraum aus dem Verbrennungsluftstrom abgetrennt werden, soweit sie der Verbrennung nicht dienlich sind.

Durch die Verwendung des mit Sauerstoff angereicherten, weit weniger als 75 % Stickstoff enthaltenden Luftstroms für die Verbrennung des Brennstoffs, wird bei wesentlicher Reduzierung nitroser Abgasanteile eine vollständigere Verbrennung als bei üblichen Verbrennungssystemen und eine Volumenreduzierung der Abgasemission erreicht, so daß sich eine Einrichtung zur Verringerung des Abgasvolumens ergibt. Der Anteil umweltschädlicher Bestandteile im Abgas, wie insbesondere $NO_x$ wird nämlich erheblich verringert bzw. im wesentlichen ganz verhindert.

Durch die Anwendung des erfindungsgemäßen Verfahrens sind aufwendige Vorrichtungen zur Reinigung des Abgasstroms wesentlich zu reduzieren bzw. bei solchen Abgasen unnötig, die bisher ohnehin im wesentlichen nur mit Stickoxiden und Stickstoff belastet waren, jedoch davon gereinigt werden mußten. Dies bringt sowohl erhebliche Raumeinsparungen als auch große finanzielle Vorteile. Beispielsweise bei Verbrennungsmotoren oder Heiz-Kesseln ergibt sich eine Reduzierung des Brennstoffverbrauches, der Wärmetransmission und des Druckverlustes in Regelventilen, die der Verbrennung vor-oder nachgeschaltet sind Der Brenn- bzw. Feuerraum kann verkleinert oder die Leistung erhöht werden. Im Gegensatz zur üblichen Technik werden durch das erfindungsgemäße Verfahren die mit dem Betrieb von Verbrennungssystemen verbundenen Umweltprobleme größtenteils bereits vor Durchführung der Verbrennung gelöst. Die Zusammensetzung des Abgases kann, ohne daß diese zum Beispiel mit einer Lambda-Sonde gemessen werden müßte, allein durch Steuerung der Zusammensetzung der Verbrennungsluft bzw. durch Primärmaßnahmen eingestellt werden. Auch Sekundärmaßnahmen auf der Abgasseite zur $NO_x$-Reduktion sind entbehrlich. Gegenüber Primärbehandlungen sind Sekundärbehandlungen wesentlich raumaufwendiger und weniger wirtschaftlich. Die Einstellung kann so erfolgen, daß die Einrichtungen zur Rohabgasbehandlung gegenüber bekannten Ausbildungen um etwa 75 % verkleinert werden können, weil das Volumen des Abgasstromes durch Primärluft-Behandlung wesentlich verringert ist.

Gegebenenfalls noch vorhandene Schadstoffe können aus dem Abgasstrom entfernt werden. Ist im Abgas des Verbrennungssystems Ruß vorhanden, so wird dieser mit einem auch für andere Verfahren geeigneten keramischen, ggf. in einem Blechgehäuse angeordneten Rußabscheider durch Ionisation und insbesondere Agglomeration abgeschieden. Dadurch sind Spannungsdurchschläge durch Rußablagerungen vermieden. Bis zur Rußabscheidung wird eventuell vorhandenes Schwefeltrioxid im Abgas belassen oder diesem beigemengt, um den elektrischen Widerstand des Rußes zu reduzieren. Der Ruß kann auch in einer gebündelten Kanalanordnung der beschriebenen Art gefiltert, gleichzeitig aufoxidiert und dann als Kohlendioxid durch die Kanalwandungen weitergeleitet werden.

Der im Brennstoff vorhandene Schwefel, der nach der Verbrennung größtenteils in Form von Schwefeldioxid ($SO_2$) bzw. Schwefeltrioxid ($SO_3$) vorliegt, wird nach der Erfindung bevorzugt als Sulfat, insbesondere nach der Rußabscheidung, abgeschieden. Dabei ist es vorteilhaft, wenn die Schwefelabscheidungen an einer Kanalanordnung der beschriebenen Art erfolgt, der mit einem Carbonat beschichtet und/oder imprägniert ist. Dabei kann die Beschichtung bzw. Imprägnierung noch einen Binder enthalten, der zum Aufbringen des Carbonats auf die Kanalanordnung verwendet wurde. Besonders vorteilhaft ist es, wenn zur Schwefelabscheidung eine Kanalanordnung verwendet wird, die aus dem Carbonat selbst und einem organischen Binder besteht. Liegt das Carbonat zur Schwefelabscheidung in einer Beschichtung bzw. Imprägnierung vor, so wird diese auf einen der üblichen oben beschriebenen Wabenkörper aufgebracht.

Dabei wird das Carbonat, wie beispielsweise eines der Alkali-, Erdalkalicarbonate (wie Ammoniumcarbonat, Magnesiumcarbonat, Calciumcarbonat) in einem organischen Binder, wie beispielsweise Methylcellulose oder Stärke, gelöst bzw. suspendiert. Dann wird die Lösung bzw. Suspension auf den Wabenkörper aufgebracht bzw. dieser in die Lösung bzw. Suspension getaucht. Soll der Wabenkörper selbst aus dem Carbonat und dem organischen Binder bestehen, so wird der Wabenkörper, wie oben beschrieben, direkt aus dem Gemisch von Carbonat und Binder extrudiert. Der entstehende Wabenkörper wird ggf. nur getrocknet und nicht gebrannt und ist von ausreichender Festigkeit. Durch die die Schwefelabscheidung enthaltene Verfahrensweise ist es möglich, die im Abgas vorhan denen Schwefeloxide unter Durchleiten des Abgases durch den Wabenkörper in Sulfate umzuwandeln. Dabei wird im Trockenen, vorzugsweise mit alkalischen Verbindungen gearbeitet. Schwefelverbindungen des Brennstoffes können auch im Abgas aufoxidiert und als Schwefeltrioxid mit Wasser ausgeschieden bzw. zu schwefeliger Säure kondensiert werden.

Nach der Erfindung kann es auch vorgesehen sein, daß die Entschwefelung gleichzeitig mit einer Entfeuchtung an der Kanalanordnung o.dgl erfolgt. Dies ist beispielsweise durch einen Wabenkörper möglich, der je zur Hälfte mit einem Trockenmittel und einem Carbonat beschichtet bzw. imprägniert ist. Dadurch kann im Gegenstromverfahren einerseits die Luft zur Entfeuchtung in der einen Richtung und andererseits das Abgas zur Entschwefelung in der anderen Richtung durch dieselbe Kanalanordnung geleitet werden. Dabei kann gleichzeitig noch ein Wärmeaustausch zwischen Abgas und Luftstrom erfolgen. Auch bei dem mit einem Carbonat beschichteten Wabenkörper kann die Beschichtung bzw. Imprägnierung durch nachträgliches Aufdüsen der Lösung bzw. Suspension aufgebracht bzw. erneuert werden.

Bei einer anderen bevorzugten Ausführungsform des erfindungsgemäßen Verfahrens wird die Luft nach der Gasgemisch-Trennung, Be- bzw. Entfeuchtung, Temperierung o.dgl als Atem- bzw. Behandlungsluft für Pflanzen, Tiere, Zellkulturen, in klimatisierte Räume, einem Beatmungssystem o.dgl. zugeführt. In diesem Fall kann die mit Sauerstoff angereicherte Luft beispielsweise als Inhalationsluft für therapeutische Zwecke eingesetzt werden. Durch das Verfahren ist in einfacher Weise ein kontinuierliches Zuführen von mit Sauerstoff angereicherter Luft beispielsweise in die Atemluft von Patienten möglich.

Die Trenneigenschaften des jeweiligen Behandlungs- bzw. Trennmittels können in vorteilhafter Weise dadurch beeinflußt werden, daß der Druck mindestens eines Gasstromes an der Eingangsseite und/oder an der Ausgangsseite des Trennmittels verändert wird. Zum Beispiel kann an einer oder beiden Seiten der Strömungswiderstand dadurch verändert werden, daß der partielle Umfangsflächendruck im zugehörigen, der Leitung des Gasstromes dienenden Haupt-Kanalabschnitt verändert wird. Dies ist in einfacher Weise dadurch möglich, daß der Abstand bzw. Spalt zwischen zwei benachbarten Behandlungskörpern bzw. zwischen deren einander gegenüberliegenden Ein- und Ausgangsseiten verändert wird. Hierfür kann mindestens eine der Kanalanordnungen mit einer Stelleinrichtung stufenlos in Richtung des die beiden Kanalanordnungen geradlinig verbindenden Kanalabschnittes verstellbar sein, der zweckmäßig über seinen gesamten Durchlaßquerschnitt frei bzw. offen ist.

Statt dessen oder zusätzlich kann auch in der Wandung dieses Haupt-Kanalabschnittes ein Abströmventil in Form beispielsweise eines Lüftungsgitters vorgesehen sein, dessen Durchlaßquerschnitt zwischen einem offenen und einem geschlossenen Zustand stufenlos verstellbar ist. Insbesondere bei Verwendung einer Gas-Trennmembran als Behandlungsmittel kann dadurch der Anströmdruck auf die physikalischen Permeabilitäts-Werte der Membran so abgestimmt werden, daß eine gewünschte Gasmolekel-Permeabilität erzielt wird. Wird zum Beispiel atmosphärische Luft an der Gas-Trennmembran um Stickstoffanteile dadurch verarmt, daß an der Anströmseite der Membran derjenige Flächendruck eingestellt wird, bei welchem im wesentlichen nur die Sauerstoffmoleküle passieren, während die Stickstoffmoleküle abgewiesen werden, so entweichen letztere über die genannte partielle Umfangsfläche. Dadurch steht ein Stickstoffstrom zur Verfügung, der ebenso wie der Abgasstrom bzw. der aus erfindungsgemäß klimatisierten Nutz- und Wohnräumen anfallende Fortluftstrom für zahlreiche Zwecke verwendet werden kann.

Der Stickstoffstrom kann zum Beispiel für anorganische Materialbehandlungen eingesetzt werden, wobei vorzugsweise zur sicheren Verfahrensführung der Reduktion Wasserstoff zugesetzt wird. Beispiele können die Herstellung keramischer Glasuren oder von Katalysatoren, das Sprühtrocknen, die Behandlung von Metallen, Metallhärteverfahren oder Keramik-Reduktionsbrandverfahren sein. Insofern ist der jeweilige Gasstrom für die Reduktion, als Schutzgas und als Korrosionsschutz-Medium bei Produktionsverfahren geeignet. Weiterhin kann das anfallende Stickstoffgas auch zur temperierenden bzw. sauerstoffreien Bewahrung von Supraleitern verwendet werden. Ist das Stickstoffgas trocken, so kann es auch direkt aus der Gastrennung als Prozeßgas einem Supraleiter zugeführt werden. Zum Beispiel kann mit dem Stickstoffstrom supraleitendes Material gekühlt, gefördert oder, wenn es fließfähig ist, in einem Schwebezustand fluidisiert werden. Weiterhin kann der Stickstoffstrom als Druckgas für Regel-, Steuer- und Antriebsgeräte eingesetzt werden. Auch können Fruchtifizierungsprozesse mit dem Stickstoff gesteuert werden; zum Beispiel können Früchte, deren Reifungsprozeß verzögert werden soll, mit dem aus dem Verfahren anfallenden Stickstoff reduziert oder mit der an Sauerstoff angereicherten Luft beschleunigt werden. Schließlich ist der mit Stickstoff angereicherte Gasstrom auch zum Löschen von Bränden geeignet.

Nach dem erfindungsgemäßen Verfahren wird zweckmäßig ein und dasselbe Behandlungsmittel aufeinanderfolgend und insbesondere im Gegenstrom mit zwei unterschiedlichen Gasgemischen, nämlich einem Primär-Gasgemisch, wie einem durch Luft gebildeten oder aus Luft ohne Verbrennung erzeugten Gasgemisch und einem Sekundär-Gasgemisch, wie Verbrennungs-Abgas oder Abluft, durchspült. Dadurch kann das Behandlungsmittel schrittweise oder kontinuierlich stets wieder zumindest auf seinen für die Behandlung des Primär-Gasgemisches geeigneten Zustand regeneriert werden. Zum Beispiel kann mit dem Stickstoffstrom oder mit dem erwärmten Abgasstrom das aus dem Primär-Gasgemisch aufgenommene Wasser aus dem Behandlungsmittel wieder ausgetrieben werden und gleichzeitig das Behandlungsmittel den Wärmegehalt des Abgasstromes aufnehmen, den das Behandlungsmittel dann bei nachfolgender Durchspülung mit dem Primär-Gasstrom an diesen als Wärmetauscher abgibt. Dieser Vorgang erfolgt zweckmäßig stetig und kontinuierlich dadurch, daß stets ein Teil des Behandlungsmittels nur dem einen Gasgemisch und ein anderer Teil dem anderen Gasgemisch ausgesetzt ist und daß diese Teile laufend gegeneinander ausgetauscht werden. Hierzu werden das Behandlungsmittel und diesem zugeordnete Aus- sowie Eintritte von Haupt-Kanalabschnitten für die Gasgemische gegeneinander bewegt. Es ist vorteilhaft, wenn mindestens eine der Kanalanordnungen während des Gasdurchtritts um eine zur Haupt-Strömungsrichtung des Gasstroms etwa parallele, insbesondere zwischen den Gasgemisch-Strömen liegende Achse gedreht wird. Durch dieses Drehen mit vorzugsweise 5 bis 20, insbesondere etwa 10 U/min ist ein gleichmäßiger Durchtritt der Luft durch die einzelnen Waben und somit eine effektive Gasgemisch-Trennung bzw. Trocknung bzw. Temperierung usw. gewährleistet. Dabei ist es nach der Erfindung bevorzugt, wenn die Drehbewegung und/oder Lagerung der Kanalanordnung wenigstens teilweise mit Hilfe von Magnetkraft erfolgt. Auch können mehrere oder alle hintereinander liegenden Behandlungskörper der Einrichtung synchron drehen oder über einen gemeinsamen Antrieb verbunden sein. Allerdings kann durch Drehzahländerung des jeweiligen Behandlungskörpers dessen Behandlungswirkung verändert bzw. eingestellt werden.

Die Erfindung betrifft des weiteren eine Einrichtung zur selektiven, mindestens teilweisen Trennung wenigstens eines Bestandteiles aus einem Gasgemisch, wie Prozeß-Luft, wobei die Einrichtung insbesondere zur Durchführung des erfindungsgemäßen Verfahrens geeignet sein soll. Die Einrichtung weist einen zum Beispiel an die Atmosphäre angeschlossenen Eingang für den Eintritt des Gasgemisches und mindestens einen Ausgang auf, aus welchem das erfindungsgemäß erzeugte Gasgemisch als Nutz- bzw. Brauchgas austritt und der zum Beispiel an den Einlaß einer Einrichtung angeschlossen wird, in welcher dieses Nutzgas zur Durchführung eines Prozesses benötigt wird. Zwischen dem Eingang und dem Ausgang ist mindestens eine Fluidführung vorgesehen und mindestens eine Fluidführung führt durch wenigstens eine Behandlungsstation, die als Gas-Trennstation, als Hydrierstation, als Temperierstation, als Filterstation, als Prozeßstation o.dgl ausgebildet ist, wobei je nach Verwendungszweck jede beliebige Anzahl und Kombination der genannten Stationen hintereinander geschaltet sein kann. Mindestens eine Station weist zweckmäßig einen vom Gas zu beaufschlagenden Behandlungskörper bzw. ein Behandlungs- oder Trennmittel für das Gas auf. Dadurch ist eine vielfältige Behandlung mindestens eines Gasgemisches im Durchfluß in einfacher Weise möglich.

Erfindungsgemäß wird des weiteren vorgeschlagen, daß mindestens eine Behandlungsstation eine vom Gasstrom beaufschlagte gebündelte Kanalanordnung wenigstens einer der beschriebenen Arten aufweist. Erfindungsgemäß kann auch jede der beschriebenen Behandlungsstationen für sich allein oder in beliebiger Kombination mit anderen Behandlungsstationen für andere Verfahren und Einrichtungen verwendet werden.

Die Kanäle der Kanalanordnung können zur Adsorption eines Gasgemisch-Bestandteiles geeignete Wandungen aufweisen, zum Beispiel im wesentlichen aus Zeolith o.dgl. bestehen oder eine Beschichtung in Form einer Engobenglasur aus einem ent sprechenden Werkstoff aufweisen, wobei in diesem Fall zweckmäßig alle so ausgebildeten Kanäle an beiden Enden offen sind. Statt dessen oder zusätzlich können Wandungen von Kanälen für mindestens einen bestimmten Bestandteil des Gases durchlässig und für einen weiteren im wesentlichen undurchlässig sein, wofür diese Wandungen entweder aus einem als entsprechende Trennmembran geeigneten Werkstoff bestehen und/oder mit einer entsprechenden Schicht bzw. Beschichtung versehen sind. Zum Beispiel kann an den Wandungen eine Folie vorgesehen sein. Zweckmäßig sind in diesem Fall eingangsseitige Kanäle im Abstand von ihren Eingangsenden und ausgangsseitige Kanäle im Abstand von ihren Ausgangsenden mit Membranabschnitten sacklochartig verschlossen, wobei zumindest statistisch jeder zweite Kanal an einem anderen Ende verschlossen ist. Im wesentlichen jeder eingangsseitig offene Kanal bildet eine gemeinsame Wandung mit mehreren benachbarten, ausgangsseitig offenen Kanälen. Dadurch sind Eingangskanäle und Ausgangskanäle gebildet, die durch teilpermeable Kanalwandungen miteinander verbunden sind. Mindestens eine teilpermeable Wandung kann sich auch über den gesamten Durchflußquerschnitt des Trennkörpers erstrecken und zum Beispiel außen an dessen Eingangsseite oder Ausgangsseite vorgesehen sein.

Um den Trenngrad zu erhöhen, mit welchem der jeweils gewünschte Bestandteil aus dem Gasgemisch entfernt wird bzw. um unterschiedliche Bestandteile des Gasgemisches abzutrennen, sind entweder stufenweise aufeinanderfolgend arbeitende Behandlungsstationen hintereinander geschaltet und/oder in mindestens einer Behandlungsstation zwei oder mehr unmittelbar aufeinanderfolgend wirksame Behandlungsstufen vorgesehen. Die Behandlungsstation bzw. Behandlungsstufen können der beschriebenen Änderung bzw. Einstellung des Feststoffgehaltes, des Feuchtigkeitsgehaltes, des Sauerstoffgehaltes, des Stickstoffgehaltes, des Wärmeinhaltes, des Kohlendioxidgehaltes, des Schwefelgehaltes o.dgl. dienen.

Sind zwei oder mehr im wesentlichen gesonderte Gasgemisch-Ströme vorgesehen, so kann zwischen diesen in mindestens einer Behandlungsstation auch ein stofflicher Austausch vorgesehen werden. Insbesondere kann Restsauerstoff aus einem Abgas- oder Abluftstrom abgetrennt und unmittelbar wieder dem Zuluftstrom zugeführt werden. Des weiteren kann dem Zuluftstrom oder dem Abgas- bzw. Abluftstrom vor der Gasgemisch-Trennung Wasser entzogen und nach dieser Trennung wieder Wasser zugeführt werden. Das Wasser wird zum Beispiel von der Zuluft an das Abgas abgegeben, nachdem das Abgas mindestens eine Trennstation passiert hat; andererseits wird Wasser, das wenigstens zum Teil durch einen Prozeß, zum Beispiel die Feuerung, erzeugt wird, von dem Abgas in entsprechender Weise nach der Luft-Gastrennung an die Zuluft abgegeben.

Je nachdem, wie groß die Durchsatzvolumina der Gasströme sind und welche Art der Behandlung mit einer Behandlungssubstanz bzw. einem Trennmittel vorgesehen ist, können die Wandungen, insbesondere die Kanalwandungen, eine Dicke zwischen 3/100 bis 3/10 mm aufweisen, wobei eine Wandungsdicke von 5 bis 8/100 mm bevorzugt wird. Statt dessen oder zusätzlich können die Kanäle, die zum Beispiel im wesentlichen rechteckige bzw. quadratische Querschnitte aufweisen, eine lichte Weite zwischen 1/10 mm und 6 mm haben, wobei eine Weite von höchstens 3/10 mm bevorzugt ist. Unabhängig von diesen Bemessungen ist es vorteilhaft, wenn die Dicke der genannten Schichten bzw. Beschichtungen in der Größenordnung von 1/1000 mm liegt. Schließlich ist es statt dessen oder zusätzlich vorteilhaft, wenn die Länge der Kanäle zwischen 35 mm und 500 mm liegt. Durch die genannten Dicken, Weiten und Längen können die Permeabilität, die Speicherfähigkeit, die Strömungswiderstände u.dgl beeinflußt werden.

Durch mit Stickstoff gefüllte Mehlkorn-Materialien aus Chemiewerkstoffen, Plasten o.dgl. kann in der Keramikmasse, die zur Herstellung des Wabenkörpers dient, eine Porosität bzw. Perforation der Wandungen genau bestimmbar eingestellt werden, um auf diese Weise Keramik-Membranen zu erhalten.

Die Erfindung betrifft des weiteren ein auch auf anderen Gebieten anwendbares Lüftungsgitter, das als Grundkörper einen einteilig aus einem Metallblech gestanzten Tragrahmen aufweist. Dessen Rahmenöffnung ist von quer zur Rahmenebene abgewinkelten Randstegen begrenzt, von denen zwei gegenüberliegende die Gitterlamellen tragen, während zwei weitere dafür vorgesehen sind, von den Gitterlamellen in Schließlage über- bzw. untergriffen zu werden. Die Gitterlamellen, die aus demselben Metallblech bestehen können, weisen abgewinkelte Enden auf, aus denen vorstehende hohle Lagerzapfen einteilig herausgeformt sind. Diese Lagerzapfen sind druckknopfartig in Lagerbohrungen der zugehörigen Randstege eingesprengt, wobei der Tragrahmen und/oder die jeweilige Gitterlamelle in sich federnd nachgiebig sind. Weitere, aus den Enden der Gitterlamellen herausgeformte, zapfenförmige Nocken greifen in eine für alle Gitterlamellen gemeinsame Steuerstange aus dem genannten Metallblech ein, die an einem Ende der Gitterlamellen zwischen diesen und dem zugehörigen Randsteg des Rahmens liegt. Dadurch kann diese Steuerstange als Leistenteil der alle Gitterlamellen synchron bewegt, ohne Nieten lediglich durch Steckverbindungen angeordnet werden. Die Steuerstange weist einen gezahnten Laschenvorsprung mit vier Zahnlücken auf, in welche ein Zahnsegment mit vier Zähnen eingreift, die sich etwa über einen Bogenwinkel von 120° erstrecken. Über dieses Zahnsegment, das mit einer Welle die zugehörige Rahmenzarge durchsetzt und an der Außenseite des Rahmens mit einer aufgesteckten Handhabe versehen ist, und über die Steuerstange wird die Drehbewegung der Handhabe auf die Gitterlamellen übertragen, die durch Einklipsen gelagert und mit der Steuerstange verbunden sind.

Wird der Rahmen an der Einbaustelle des Lüftungsgitters mit Klammern befestigt, so sind diese zweckmäßig einteilig mit dem Rahmen ausgebildet. Dadurch ergibt sich ein Gitter mit verstellbarer Gitteröffnung, dessen Einzelteile ohne gesonderte Befestigungsmittel wie Schweißen, Nieten o.dgl miteinander verbunden sind. Das Zahnsegment mit vier Zahnzapfen bildet mit dem gezahnten Laschenvorsprung der Steuerstange einen selbsthemmend wirkenden Zahntrieb, so daß die Gitterlamellen ohne gesonderte Maßnahmen in der jeweils eingestellten Lage sicher gehalten sind.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Ausführungsbeispiele der Erfindung sind in den Zeichnungen dargestellt und werden im folgenden näher erläutert. In den Zeichnungen zeigen:

Fig.1 eine erfindungsgemäße Einrichtung, die insbesondere zur Erzeugung von Prozeß-Luft für einen Verbrennungsprozeß geeignet ist, in schematischer Darstellung;

Fig. 2 eine weitere Ausführungsform einer Einrichtung in einer Darstellung entsprechend Fig. 1;

Fig. 3 und Fig. 4 Einrichtungen, die insbesondere zur Erzeugung von Klimatisier-Luft geeignet sind, in DarFig. 4 stellungen entsprechend den Fig. 1 und 2;

Fig. 5 bis Fig. 7 Flußschemata von drei weiteren Einrichtungen, die insbesondere zur Erzeugung von Fig. 7 Klimatisier-Luft geeignet sind;

Fig. 8 bis Fig. 10 Flußschemata von drei weiteren Einrichtungen, bis die insbesondere zur Erzeugung von Prozeß-Fig. 10 Luft für Verbrennungsprozesse geeignet sind;

Fig. 11 einen Rußabscheider im Axialschnitt;

Fig. 12 eine erfindungsgemäße, als Wabenkörper ausgebildete Kanalanordnung in Richtung des Durchflusses gesehen;

Fig. 13 die Kanalanordnung gemäß Fig. 12 im Axialschnitt;

Fig. 14 einen Ausschnitt eines weiteren Ausführungsbeispieles einer Lagerung der Kanalanordnung;

Fig. 15 einen Ausschnitt der Kanalanordnung gemäß Fig. 12 in wesentlich vergrößerter Darstellung;

Fig. 16 ein Lüftungsgitter in Ansicht auf die Außenseite;

Fig. 17 einen vergrößerten Teilquerschnitt der Fig. 16 und

Fig. 18 einen Querschnitt durch die Gitterlamellen gemäß Fig. 17.

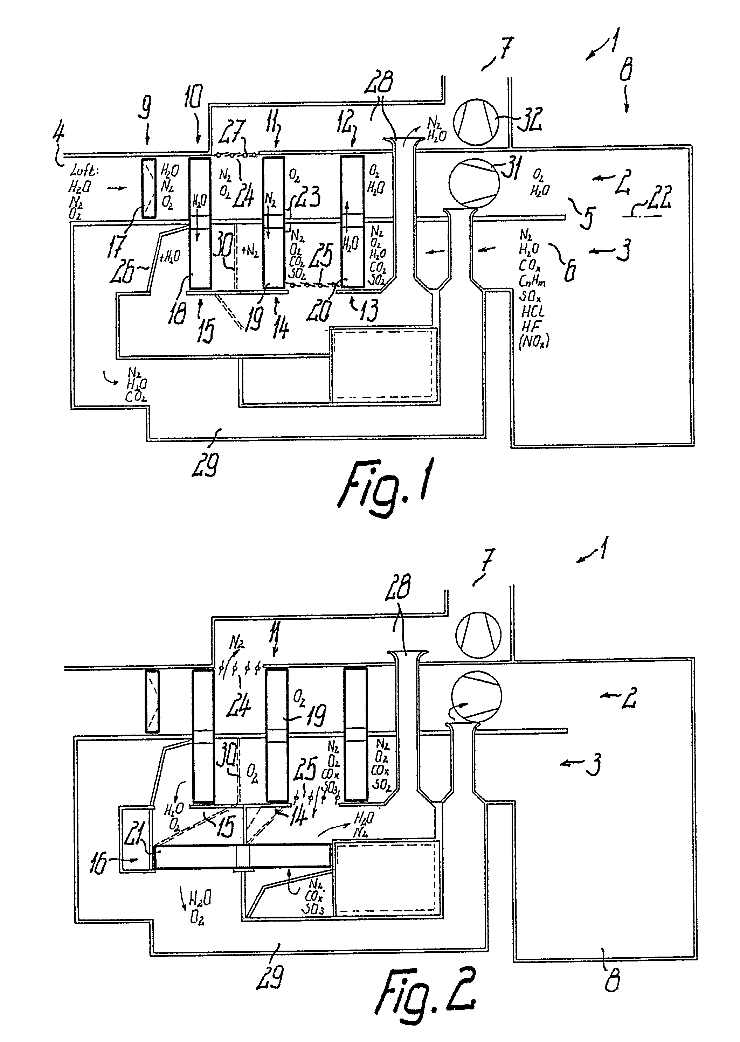

Die Einrichtung 1 gemäß Fig. 1 dient insbesondere zur Erzeugung von stickstoff-verarmter bzw. mit Sauerstoff angereicherter Verbrennungsluft, wie sie im Carnot'schen Verbren nungs-Kreisprozeß, wie bei Dieselmotoren, Otto-Motoren, Kreiskolbenmotoren, Gasturbinen, Müllverbrennungsanlagen, katalytischen oder thermischen Nachverbrennungen, Gas-, Öllampen- und Kerzenbeleuchtungsflammen, bei Pyrolysen, bei Dampferzeugern und Heizkesseln, Öfen und Befeuerungs-Kaminen im Brennraum benötigt wird. Der in der atmosphärischen Luft enthaltene Ballast, wie Luftstickstoff und Luftwassergehalt soll vor Eintritt in die Verbrennung abgetrennt werden, um eventuell Abgasreinigungs-Maßnahmen nach der Verbrennung völlig entbehrlich zu machen. Mit dem dadurch aus der Luft abgetrennten Sauerstoff soll das Volumen der dem Prozeß bzw. der Verbrennung zugeführten Gasgemisches, bezogen auf den Norm-Zustand, auf etwa ein Viertel des Ausgangsvolumens reduziert werden. Dieses mit Sauerstoff angereicherte Gasgemisch dient im Verbrennungsraum bzw. bei der Verbrennung zur Aufoxidation von Wasserstoff, Kohlenwasserstoffen, Kohlenstoff, Schwefel usw.. Zur Behandlung des jeweiligen Gasgemisches, zu der außer dem selektiven Abtrennen von Wasser und Stickstoff auch das Vorwärmen des Verbrennungssauerstoffes gehören kann, werden unbrennbare, anorganische Behandlungskörper in hintereinander geschalteter Anordnung verwendet, die Adsorbentien, Katalysatormaterialien, Molekularsiebe und/oder hygroskopische Stoffe enthalten. Zweckmäßig ist mindestens ein Behandlungskörper oder sind alle Behandlungskörper regenerierfähig in dem Sinn ausgebildet, daß sie simultan mit der Verfahrensdurchführung laufend wieder in ihren für die jeweilige Behandlung geeigneten Zustand zurückgeführt werden können. Diese Regeneration erfolgt zweckmäßig mit Hilfe des Abgasstromes, der zum Beispiel das aufgenommene Wasser oder den Stickstoff austreibt bzw. die Wärmeenergie zur Vorwärmung liefert. Zur Entfeuchtung kann mindestens ein Luvo-Entfeuchter verwendet werden.

Zur Gastrennung und ggf. zur Übertragung des gesamten Wärmeinhaltes (Enthalpie) von den anderen Gasbestandteilen auf den Sauerstoff oder die sauerstoffreichen Gasbestandteile werden zweckmäßig Engoben oder organische Membranflächen benutzt. Ferner kann aus dem Abgas in trockener oder naßer Form mindestens ein zum Beispiel alkalisches bzw. ammoniakalisches Reaktionsprodukt erzeugt werden. Zum Beispiel kann nach einem regenerierbaren Behandlungskörper, der als Stoff- bzw. Wärmetauscher ausgebildet ist und eine katalytische Aufoxidation bewirkt, ein solches Reaktionsprodukt erhalten werden, wenn die Stöchiometrie des Reduktionsmittels für Schwefeloxide mit einem Additiv optimal bewirkt wird. Wenn Stickoxide gemeinsam mit Ammoniak im Wärmetauscher betrieben würde und Schwefel gleichzeitig vorhanden wäre, so würde der Wärmetauscher sehr schnell zusetzen. Daher wird Schwefeldioxid zu Schwefeltrioxid zum Beispiel mit Kalk aufoxidiert. Das Schwefeltrioxid macht eventuell vorhandene Asche leitfähig, wodurch sich eine für die Abscheidung günstige Additiv-Stöchiometrie ergibt.

Die Einrichtung 1 weist eine Primär-Fluidführung 2 für das zu behandelnde Luft-Gasgemisch und eine zu dieser unmittelbar benachbarte bzw. parallele Sekundär-Fluidführung 3 zur Behandlung bzw. Nutzung des Abgas-Gasgemisches auf. Die Primär-Fluidführung 2 nimmt atmosphärisches Luftgemisch über einen Eingang 4 auf und gibt nach der Behandlung dieses Luftgemisches das erzeugte Nutz-Gasgemisch über einen Ausgang 5 an den Verbraucher bzw. an eine Prozeß-Station 8 ab. Aus dieser nimmt die Sekundär-Fluidführung 3 über einen Eingang 6 das gasförmige und ggf. mit festen Schwebestoffen belastete Prozeßprodukt auf, das nach Behandlung bzw. nach Nutzung zur Regeneration oder zur Erzeugung von Abgas-Produkten durch einen Ausgang 7 als Fortgas wieder in die Atmosphäre zurückgeleitet wird.

Die Primär-Fluidführung 2 weist im dargestellten Ausführungsbeispiel mehrere im wesentlichen geradlinig hintereinander geschaltete und über miteinander fluchtende Haupt-Kanalabschnitte verbundene Behandlungsstationen 9, 10, 11, 12 auf, die zweckmäßig entgegen der Darstellung nicht etwa horizontal nebeneinander, sondern vertikal übereinander liegen, so daß zum Beispiel die Strömung in der Fluidführung 2 von oben nach unten gerichtet ist. Die in Strömungsrichtung erste Behandlungsstation 9 ist zweckmäßig ein Feststoffabscheider bzw. Filter, mit welchem Schwebeteilchen aus der Luft abgeschieden werden. Die zweite, unmittelbar nachgeschaltete Behandlungsstation 10 sient als Entfeuchter, mit welchem der gefilterten Luft der größte Teil ihres Wassergehaltes entzogen wird. Die nächste, unmittelbar nachgeschaltete Behandlungsstation 11 dient als Gas-Trennstation, in welcher dem gefilterten und entfeuchteten Luft-Gasgemisch Stickstoff entzogen und im dargestellten Ausführungsbeispiel adsorptiv zurückgehalten wird. Die unmittelbar nachgeschaltete weitere Behandlungsstation 12 dient zur Vorwärmung des gefilterten, entfeuchteten und mit Sauerstoff angereicherten Verbrennungsluft-Gasgemisches sowie ggf. für dessen Befeuchtung. Das so behandelte Gasgemisch wird dann als Verbrennungsluft der Prozeß-Station 8 über den Ausgang 5 zugeführt.

Bei der Verbrennung entstehen zahlreiche, je nach verwendetem Brennstoff, nach der Brenntemperatur und der Vollständigkeit der Verbrennung unterschiedliche feste und gasförmige Schadstoffe. Diese können zum Beispiel Kohlenoxide, Kohlenwasserstoffe, Schwefeloxide, Chlorverbindungen, Fluidwasserstoffe, Stickoxide o.dgl sein. Ferner können in dem Abgas Restanteile des zugeführten Sauerstoffes, des Stickstoffes u.dgl. enthalten sein. Dieses Abgas wird durch den Eingang 6 der Sekundär-Fluidführung 3 zugeführt.

Für das Abgas sind ebenfalls mehrere geradlinig hintereinander geschaltete und zueinander unmittelbar benachbarte Behandlungsstationen 13, 14, 15 vorgesehen. In der ersten Behandlungsstation 13 wird das Abgas entfeuchtet und gekühlt. In der nachfolgenden Behandlungsstation 14 wird das Abgas mit dem aus der Behandlungsstation 11 anfallenden Stickstoff angereichert sowie weitergekühlt und in der Behandlungsstation 15 wird das Abgas mit dem aus der Behandlungsstation 10 anfallenden Wasser befeuchtet sowie nochmals gekühlt, wonach das so behandelte Abgas dem Ausgang 7 zugeführt wird.

Die Behandlungsstation 9 weist einen nur in der Primär-Fluidführung 2 liegenden Behandlungskörper 17, nämlich zum Beispiel das genannte Filter auf. Die Behandlungsstationen 10, 15 bzw. 11, 14 bzw. 12, 13 weisen jeweils einen gemeinsamen Behandlungskörper 18, 19, 20 auf, der jeweils auf einem etwa seiner Hälfte entsprechenden Sektor im Strom einer der beiden Fluidführungen 2, 3 liegt. Dadurch werden alle diese Behandlungskörper 18, 19, 20 vom Abgas erwärmt, wobei durch sie als Wärmetauscher diese Wärme dem in der Primär-Fluidführung 2 strömenden Gasgemisch zugeführt wird. Der erste Behandlungskörper 18 nimmt mit einem sich laufend gegenüber der Fluidführung 2 verschiebenden Teilsektor Wasser aus der zugeführten Luft und mit einem weiteren, sich entsprechend verschiebenden Teilsektor Wärme aus dem Abgas auf, an das er das der Luft entzogene Wasser gleichzeitig wieder abgibt. In entsprechender Weise nimmt der Behandlungskörper 19 aus der zugeführten Luft Stickstoff auf, die er an das Abgas abgibt. Schließlich gibt der Behandlungskörper 20 an die Luft Wasser ab, das er aus dem Abgas aufnimmt. Im Bereich des Behandlungskörpers 18 ergibt sich somit ein Querstrom von Wasser aus der Behandlungsstation 10 zur Behandlungsstation 15. Im Bereich des Behandlungskörpers 19 transportiert der Querstrom Stickstoff und im Bereich des Behandlungskörpers 20 Wasser.

Die Behandlungskörper 18, 19, 20 sind im wesentlichen um eine gemeinsame, insbesondere annähernd vertikale Drehachse 22 langsam drehend drehbar, wodurch sich die genannte Verschiebung ergibt. Durch Verändern bzw. Regeln der Drehzahl des jeweiligen Behandlungskörpers unabhängig von den übrigen Behandlungskörpern kann dessen Arbeitscharakteristik verän dert werden. Diese kann auch mit einer Steuereinrichtung 23 verändert werden, durch welche der Strömungsabstand zwischen benachbarten Behandlungskörpern und dadurch derjenige Druck bzw. das Druckgefälle verändert werden kann, mit welchem das jeweilige Gasgemisch den zugehörigen Behandlungskörper anströmt bzw. verläßt. Durch die Änderung des Spaltabstandes zwischen benachbarten Behandlungskörpern wird das Volumen der diesem Spalt entsprechenden Zwischenkammer verändert, welche von den zugehörigen benachbarten Behandlungskörpern und dem dazwischen liegenden Haupt-Kanalabschnitt der entsprechenden Fluidführung begrenzt ist. Die genannte Arbeitscharakteristik kann auch durch mindestens eine vom zugehörigen Behandlungskörper gesonderte Abströmöffnung 24 bzw. 25 der jeweiligen Kammer beeinflußt werden. Ist die zum Beispiel in der Kanalwandung am Umfang des Kanalabschnittes liegende Abströmöffnung in ihrem Durchlaßquerschnitt mit Hilfe eines Lüftungsgitters 27 o.dgl. veränderbar, so kann dadurch die genannte Arbeitscharakteristik stufenlos verändert werden.

Gemäß Fig. 1 ist in der Fluidführung 2 zwischen den Behandlungsstationen 10, 11 eine Abströmöffnung 24 vorgesehen, die über einen Abströmkanal 28 zum Fortgas-Ausgang 7 führt. In der Fluidführung 3 ist zwischen den Behandlungsstationen 13, 14 eine Abströmöffnung 25 vorgesehen, die ebenfalls über den Abströmkanal 28 zum Ausgang 7 führt. Im dargestellten Fall sind die Abströmöffnungen 24, 25 jedoch geschlossen. Auch sind benachbarte, jeweils zwischen zwei Behandlungskörpern liegende Kammern beider Fluidführungen 2, 3 im wesentlichen gasdicht voneinander durch mindestens eine Zwischenwand getrennt, so daß Gasbestandteile nur innerhalb des jeweiligen Behandlungskörpers, und zwar nur durch mechanischen Transport von einer Fluidführung zur anderen gelangen können. Da die Fluidführungen 2, 3 entgegengesetzt durchströmt werden, können Gasbestandteile von der jeweiligen Kammer einer Fluidführung auch nicht durch den genannten Transport in die benachbarte Kammer der anderen Fluidführung gelangen.

Falls es erwünscht ist, kann der Abgasstrom an jeder beliebigen Stelle der Sekundär-Fluidführung 3 auch wenigstens zum Teil abgezweigt und zur nochmaligen Beteiligung an der Verbrennung der Prozeß-Station 8 zugeführt werden. Dieser abgezweigte Gasstrom kann an jeder beliebigen Stelle, zum Beispiel vor der Behandlungsstation 12, in die Primär-Fluidführung 2 geleitet und dadurch ggf. nochmals einer Behandlung unterzogen werden. Im dargestellten Ausführungsbeispiel kann das die Behandlungsstation 15 verlassende Abgas durch eine Abströmöffnung 26 und einen Rückführkanal 29 in eine den Behandlungsstationen 10, 11, 12 nachgeschaltete Mischstation geleitet werden, in der das Abgas mit dem behandelten Zuluftstrom vermischt und dann das Gemisch der Station 8 zugeführt wird. Bei 30 ist eine schließ- und öffenbare Zwischensperre 30 angedeutet, die durch ein Lüftungsgitter mit verstellbaren Gitterlamellen gebildet sein kann. Die Zwischensperre 30 liegt in der Sekundär-Fluidführung 3 zwischen den Behandlungsstationen 14, 15, so daß mit ihr der Abgasstrom nach Verlassen der Behandlungsstation 14 unter Umgehung der Behandlungsstation 15 durch eine entsprechende Abströmöffnung unmittelbar in den Abströmkanal 28 oder den Rückführkanal 29 geleitet werden kann. Eine derartige Zwischensperre mit zugehöriger Abströmöffnung und Anschluß an den Abströmkanal 28 bzw. den Rückführkanal 29 kann benachbart zu jeder der beschriebenen Behandlungsstationen 9 bis 16 vorgesehen sein.

In der Primär- und/oder in der Sekundär-Fluidführung sind vorteilhaft Förder- und/oder Steuerbzw. Regelmittel vorgesehen, mit welchen der jeweils zugehörige Gasstrom gefördert und die Fördermenge justiert bzw. verändert werden kann. Das der Primär-Fluidführung 2 zugeordnete Förderorgan 31 ist mindestens einer, insbesondere allen zugehörigen Behandlungsstationen 9 bis 12 nachgeschaltet, so daß es die zugeführte Luft durch diese Behandlungsstationen ansaugt. In den Einlaß des Förderorganes 31 mündet auch der Rückführkanal 29, so daß die genannte Vermischung innerhalb des Förderorganes 31 erfolgen kann. Ein der Sekundär-Fluidführung 3 zugeordnetes Förderorgan 32 ist ebenfalls einer oder allen Behandlungsstationen 13 bis 15 sowie dem Abströmkanal 28 nachgeschaltet, so daß es durch diese ansaugt und beispielsweise unter Druck in einen Kamin, einen Motor-Auspuff o.dgl. fördert.

Während bei der Ausführungsform nach Fig. 1 mindestens eine oder alle Behandlungsstationen nach dem Adsorptionsprinzip arbeiten, arbeitet bei der Ausbildung nach Fig. 2 zumindest die Behandlungsstation 11 nach dem Prinzip einer Gas-Trennmembran. Stickstoff wird in der Primär-Fluidführung 2 im wesentlichen vor Eintritt in den als Gasmembran ausgebildeten Behandlungskörper 9 abgewiesen und durch die geöffnete Abströmöffnung 24 dem Ausgang 7 oder einer weiteren Verwendung zugeführt. Das aus der Behandlungsstation 11 austretende, mit Sauerstoff angereicherte Gasgemisch wird entsprechend den Ausführungen zu Fig. 1 weiter behandelt und verwendet. In der Sekundär-Fluidführung 3 kann die als Wärmetauscher vorgesehene Behandlungsstation 13 so betrieben werden, daß im Abgas enthaltenes Schwefeldioxid wenigstens teilweise zu Schwefeltrioxid aufoxidiert wird. Eventuell noch im Abgasstrom enthaltener, ungenutzter Rest-Sauerstoff kann die Behandlungsstation 14 passieren, da der Behandlungskörper 19 eine Gas-Trennmembran bildet. Wesentliche Teile der anderen, genannten Bestandteile des Abgases, wie zum Beispiel Stickstoff, Kohlenoxide, Schwefeltrioxid und andere, ggf. auch feste Schadstoffe, werden vor Eindringen in die Behandlungsstation 14 abgewiesen und durch die geöffnete Abströmöffnung 25 in eine weitere Behandlungsstation 16 geleitet, die einen Behandlungskörper 21 aufweist, der ähn lich wie die beschriebenen Behandlungskörper ausgebildet ist, jedoch in diesem Fall um eine zu diesen rechtwinklige Drehachse drehbar gelagert ist.

Der von der Abströmöffnung 25 kommende Teil-Gasstrom wird von einer Seite durch einen Sektor des Behandlungskörpers 21 geleitet und dann dem Abströmkanal 28 zugeführt. Dabei erwärmt dieser Gasstrom den als Wärmetauscher vorgesehenen Behandlungskörper 21. In den anderen Sektor des Behandlungskörpers 21 wird im Gegenstrom von der anderen Seite derjenige Teil-Abgasstrom geleitet, der die Behandlungsstation 15 verläßt und Wasser, Rest-Sauerstoff sowie ggf. noch Anteile der Schadstoffe enthält. In dem Behandlungskörper 21, der aus einem Hydroxid aus Calcium, Magnesium, Natrium oder Stickwasserstoff besteht, absorbiert wesentliche Anteile der Schadstoffe, insbesondere alle säurebildenden Schadstoffe. Ferner wird in dem Behandlungskörper 21 eventuell noch vorhandenes Schwefeldioxid zu Schwefeltrioxid umgesetzt. Der von der Abströmöffnung 25 kommende Gasstrom wird nach der Behandlungsstation 16 unmittelbar dem Abströmkanal 28 zugeführt. Der von der Behandlungsstation 15 kommende Gasstrom enthält nach der Behandlungsstation 16 vor allem noch Sauerstoff und Wasser und kann daher über den Rückführkanal 29 in der beschriebenen Weise wieder dem Prozeß zugeführt werden.

Der Behandlungskörper 21 wird durch den bzw. die Gasströme chemisch so umgewandelt, daß ggf. wiederverwendbare Produkte entstehen. Diese können zum Beispiel CaF, MgF, NaF, $NH_4F$ o.dgl. sein. Ferner können auch Halbhydrate bzw. Dihydrate gebildet werden, zum Beispiel $CaSO_4$ $1/2H_2O$, $CaSO_4$ $2H_2O$, $MgSO_4$ $2H_2O$, $NaSO_4$ $2H_2O$, $NH_x$ $2H_2O$.

Durch die Zwischensperre 30 kann der Abgasstrom auch unmittelbar nach Verlassen der Behandlungsstation 14 dem zugehörigen Sektor der Behandlungsstation 16 zugeführt werden, die, ähnlich wie die zuvor beschriebenen Behandlungsstatio nen, zwei Einzel-Stationen für gesonderte Gasströme bildet. Es ist auch denkbar, die Anordnung so vorzusehen, daß zumindest ein Anteil des die Behandlungsstation 15 verlassenden Gasstromes dem einen Sektor der Behandlungsstation 16 zugeführt und nach dieser in den Abströmkanal 28 geleitet wird, während ein anderer Anteil des Abgas-Gasstromes durch den anderen Sektor der Behandlungsstation 16 im Gegenstromverfahren geführt wird. Diese Verfahrensweise eignet sich insbesondere dann, wenn zur Gastrennung das Adsorptionsprinzip angewendet wird.

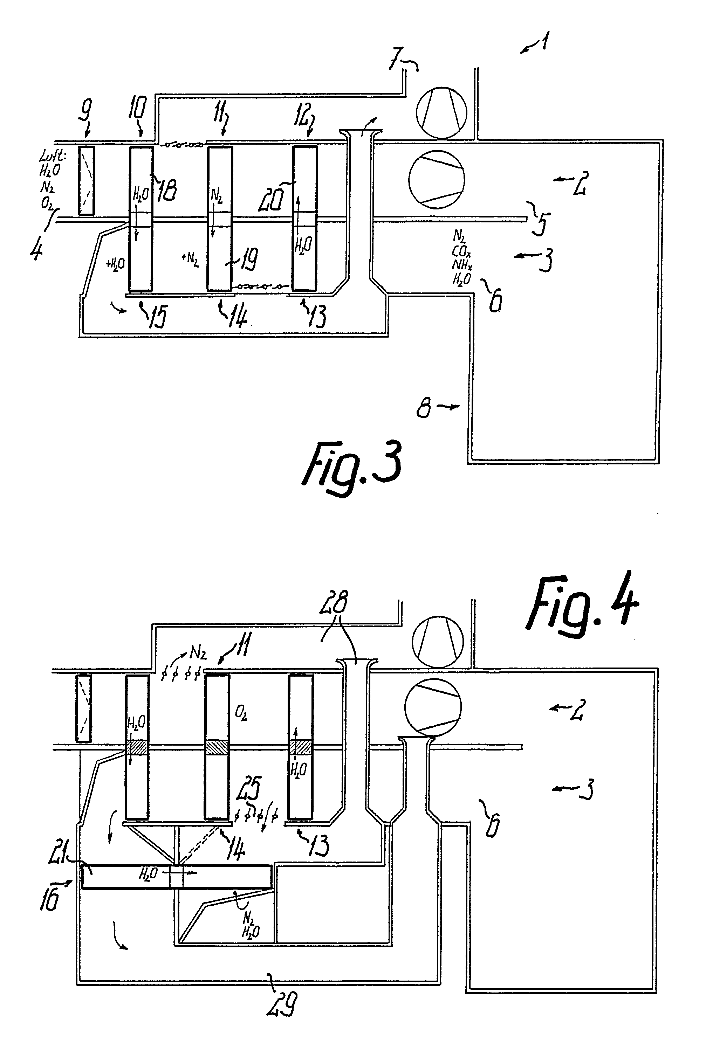

Die Einrichtungen 1 gemäß den Fig. 3 und 4 sind statt zur Verbrennung bevorzugt dafür vorgesehen, in der Primär-Fluidführung 2 ein Luft-Gasgemisch so aufzubereiten, daß es als konditionierte Zuluft bzw. als Atemluft in einen im wesentlichen geschlossenen, die Prozeß-Station bildenden Gebäuderaum, wie einen Schutzraum, Wohnraum, Laborraum oder anderen Nutzraum, geleitet werden kann. Die in diesem anfallende verbrauchte Abluft wird zweckmäßig in der beschriebenen Weise der Sekundär-Fluidführung 3 zugeführt und kann in dieser wenigstens zum Teil so aufbereitet werden, daß wenigstens Bestandteile wiederum der Zuluft beigemengt werden. Mit dem erfindungsgemäßen Verfahren kann aus der Abluft bzw. der Fortluft der Rest-Sauerstoff entzogen und auf die Zuluft übertragen werden, ohne daß ansonsten ein Umluftbetrieb erforderlich ist, durch welchen weitere Bestandteile bzw. Schadstoffe der Zuluft wieder zugeführt werden. Luft-Gasgemische enthalten mit allen ihren verschiedenen Bestandteilen sensible und latente Wärmeinhalte, die erfindungsgemäß thermodynamisch genutzt werden können, ohne daß für die Klimatisierung oder ggf. die Verbrennung die nicht gewünschten Gas-Bestandteile dem Prozeß zugeführt werden müssen. Auch der Enthalpie-Inhalt des aus der Primärluft abgetrennten Stickstoffes kann nachfolgend auf den mit Sauerstoff angereicherten Gasstrom zum Beispiel dadurch übertragen werden, daß ein zugehöriger Behandlungskörper mit dem Stickstoffstrom regeneriert wird.

Die Einrichtung 1 gemäß Fig. 3 arbeitet hinsichtlich der Primär-Fluidführung 2 sowie der Sekundär-Fluidführung 3 ähnlich wie anhand Fig. 1 beschrieben. In der Prozeß-Station 8, in der die zugeführte, konditionierte Luft hauptsächlich als Atemluft verbraucht wird, entsteht jedoch ein anderes Gasgemisch als bei einer Verbrennung. Dieses Gasgemisch enthält vor allem noch Stickstof, ,Kohlenoxide, Stickstoff-Wasserstoffverbindungen und Wasser. Das Gasgemisch gibt über die Behandlungsstation 13 an die Behandlungsstation 12 Wasser und Wärmeenergie ab, nimmt in der Behandlungsstation 14 den in der Behandlungsstation 11 abgetrennten Stickstoff und schließlich in der Behandlungsstation 15 das in der Behandlungsstation 10 entzogene Wasser auf. Der der Gastrennung dienende gemeinsame Behandlungskörper 19 der Behandlungsstation 11, 14 arbeitet nach dem Adsorptionsverfahren. Eine der Behandlungsstationen der Primär-Fluidführung 2 bzw. eine zusätzliche weitere Behandlungsstation kann auch zur Abtrennung von Kohlendioxid ausgebildet sein, wobei diese Behandlungsstation zweckmäßig der Behandlungsstation 11 nachgeschaltet ist. Nach Verlassen der Behandlungsstation 15 wird die Abluft durch den Ausgang 7 abgeführt.

Die ebenfalls zur Erzeugung von Klimatisier-Luft vorgesehene Einrichtung nach Fig. 4 arbeitet hinsichtlich der Primär-Fluidführung 2 im wesentlichen wie anhand Fig. 2 beschrieben, wobei die Behandlungsstation 11 als Gas-Trennmembran wirkt. Die der Sekundär-Fluidführung 3 zugeführte Abluft entspricht derjenigen nach Fig. 3. In der Behandlungsstation 13 kann der Abluft ein Teil des Wassers entzogen werden. Vor der Behandlungsstation 14 werden insbesondere die Schadstoff-Bestandteile durch die Abströmöffnung 25 abgeleitet, während ein wesentlicher Anteil des vorhandenen Sauerstoffes die Behandlungsstation 19 durchdringt und dann durch die zugehörige Einzel-Station der Behandlungsstation 16 geleitet wird. In dieser Einzel-Station gibt das mit Sauerstoff angereicherte und aus dem Abgas extrahierte Gasgemisch ggf. einen Teil seines Wassergehaltes ab und nimmt ggf. Wärmeenergie auf, da die Behandlungsstation 16 als Wärmetauscher arbeiten kann. Dieser Gasstrom wird dann wieder in der beschriebenen Weise der Fluidführung 2 zum nochmaligen Umlauf zugeführt. Der andere Gasstrom, der durch die Abströmöffnung 25 abgeleitet wird, wird durch die andere Einzel-Station der Behandlungsstation 16 geleitet wobei er in nicht näher dargestellter Weise den Abströmkanal 28 umgeht. Dieser Gasstrom durchströmt den Behandlungskörper 21 in der entgegengesetzten Richtung. Er nimmt in dieser Einzel-Station Wasser auf und gibt Wärmeenergie ab, wonach dieser Abluftstrom als Fortluft durch den Abströmkanal 28 abgeführt wird. Durch Drehzahländerung des Behandlungskörpers 21 kann der Wasseraustausch zwischen den beiden Einzel-Stationen der Behandlungsstation 16 gesteuert werden, wodurch die Anpassung der Einrichtung an unterschiedliche natürliche Klimaverhältnisse möglich ist. Durch Drehzahländerung mindestens eines Behandlungskörpers ist die Einrichtung zwischen Sommer- und Winter-Betrieb umschaltbar.

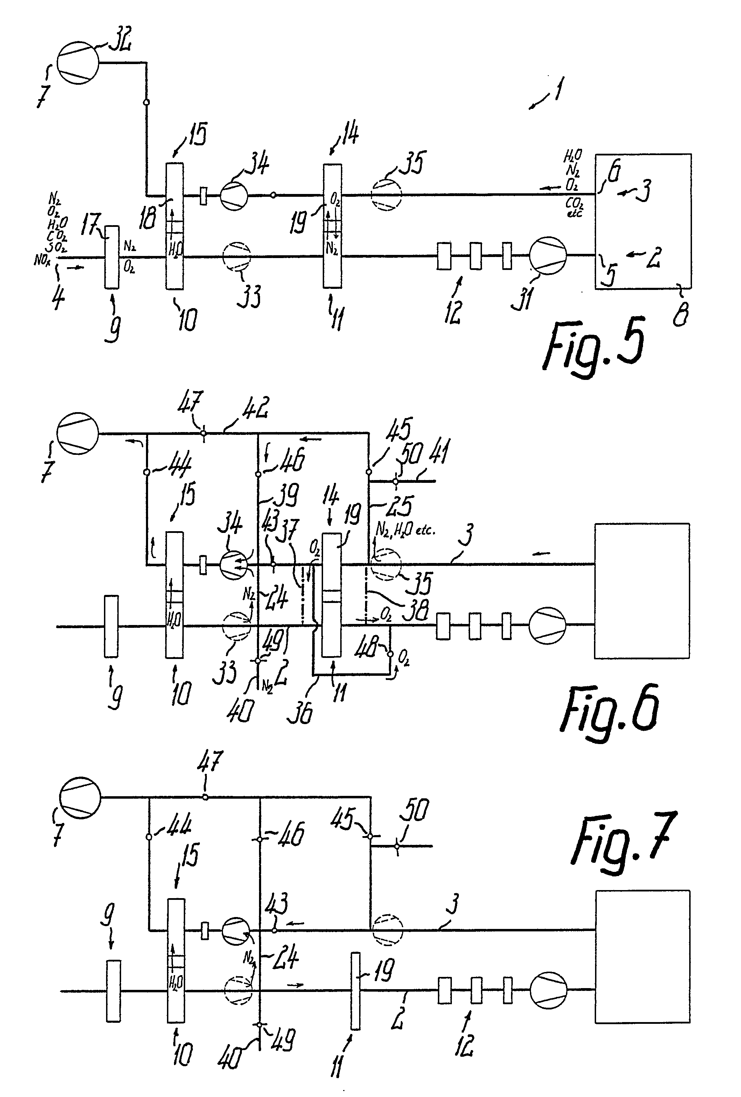

In den Fig. 5 bis 7 sind verschiedene Flußschemata für Einrichtungen dargestellt, die insbesondere zur Erzeugung von Klima- und Lüftungs-Luft durch Gastrennung geeignet sind. Alle Flußschemata gemäß den Fig. 5 bis 7 können in einer einzigen Einrichtung verwirklicht sein, so daß die Einrichtung durch Umstellung geeigneter Steuerorgane, wie Ventile, auf die unterschiedlichen Betriebsweisen umstellbar ist. Entsprechend können auch die Einrichtungen nach den Fig. 1 und 2 bzw. nach den Fig. 3 und 4 oder sogar alle Einrichtungen nach den Fig. 1 bis 4 in einer einzigen Einrichtung zusammengefaßt werden.

Gemäß Fig. 5 wird atmosphärische Luft durch den Eingang 4 der Fluidführung 2 zugeführt, in der Behandlungsstation 9 gefiltert, in der Behandlungsstation 10 entfeuchtet und in der Behandlungsstation 11 durch Molekularsiebe von Stickstoff befreit. Danach wird dieses Gasgemisch in der Behandlungsstation 12 in aufeinanderfolgenden Schritten konditioniert, zum Beispiel temperiert, mit Additiven versehen und befeuchtet, wonach es durch das Förderorgan 31 der Prozeßstation 8 zugeführt wird. Die Behandlungsstation 12 weist Behandlungskörper auf, die nicht in die Sekundär Fluidführung 3 einbezogen sind. Die aus der Prozeßstation 8 kommende und durch den Eingang 6 der Sekundär-Fluidführung 3 zugeführte Abluft nimmt in der Behandlungsstation 14 den in der Behandlungsstation 11 abgeschiedenen Stickstoff und in der Behandlungsstation 15 das in der Behandlungsstation 10 abgeschiedene Wasser auf und wird dann über den Ausgang 7 abgeführt. In der Sekundär-Fluidführung 3 kann noch mindestens ein weiterer Wärmetauscher oder mindestens ein weiteres Förderorgan vorgesehen sein. Im dargestellten Fall ist der Behandlungsstation 14 nachgeschaltet und der Behandlungsstation 15 vorgeschaltet ein Wärmetauscher und ein Förderorgan 34 vorgesehen; entsprechend ist der Behandlungsstation 14 ein Förderorgan 35 vorgeschaltet. Zwischen den Behandlungsstationen 10, 11 kann auch in Primär-Fluidführung 2 ein weiteres Förderorgan 33 vorgesehen sein. Der Behandlungskörper 18 der Behandlungsstationen 10, 15 kann als Filtertrockner bzw. Aufoxidator nach dem Ljungström-Prinzip arbeiten; nach diesem Prinzip kann auch der Gastrenn-Behandlungskörper 19 der Behandlungsstationen 11, 14 arbeiten, welcher durch die beiden Gasströme laufend regeneriert wird.

Bei der Ausführungsform nach Fig. 6 arbeitet der Behandlungskörper 19 der Behandlungsstationen 11, 14 als Gas-Trennmembran mit laufender Regeneration. Aus der zugeführten, gefilterten und entfeuchteten Luft wird an der Behandlungsstation 11 über eine Abströmleitung 24 der getrennte Stickstoff der Sekundär-Fluidführung 3 zugeführt. Die Abströmleitung 24 ist ggf. nach dem zugehörigen Förderorgan 33 an die Fluidführung 2 und vor dem zugehörigen Förderorgan 34 an die Fluidführung 3 angeschlossen. An die Sekundär-Fluidführung 3 ist vor bzw. im Bereich der Behandlungsstation 14 und ggf. nach dem zugehörigen Förderorgan 35 eine Abströmleitung 25 für diejenigen Bestandteile des Abgasgemisches angeschlossen, welche den Membran-Behandlungskörper 19 nicht durchströmen. Aus diesem tritt mit Sauerstoff angereichertes Gasgemisch aus, das über eine nach der Behandlungsstation 14 an die Sekundär-Fluidführung 3 angeschlossene Rückführleitung 36 bzw. 37 zurück in die Primär-Fluidführung 2 geleitet werden kann.

Die Rückführleitung 36 ist in Strömungsrichtung nach der Behandlungsstation 11 an die Fluidführung 2 angeschlossen, so daß der abgezweigte Gasstrom die Behandlungsstation 11 nicht nochmals belastet. Die strichpunktiert angedeutete Rückführleitung 37 dagegen ist vor der Behandlungsstation 11 und nach dem Anschluß der Abströmleitung 24 an die Fluidführung 2 angeschlossen, so daß das rückgeführte Gasgemisch nochmals die Behandlungsstation 11 durchströmt. Eine entsprechende, strichpunktiert angedeutete und die beiden Fluidführungen 2, 3 verbindende Rückführleitung 38 kann auch nach der Behandlungsstation 11 an die Fluidführung 2 und vor der Behandlungsstation 14 an die Fluidführung 3 angeschlossen sein.

Die an der Behandlungsstation 14 in die Abströmleitung 25 geleiteten Gas-Bestandteile können über eine Abzweigleitung 39 nach der Behandlungsstation 14 bzw. nach dem Anschluß der Rückführleitung 36 bzw. 37 und vor der Behandlungsstation 15 bzw. vor dem Förderorgan 34 in die Sekundär-Fluidführung 3 zurückgeführt werden. Dadurch wird die Behandlungsstation 15 nicht nur von dem aus der Abströmleitung 24, sondern auch von dem aus der Abströmleitung 25 kommenden Gasstrom durch strömt, so daß das in der Behandlungsstation 10 aufgenommene Wasser sehr wirksam ausgetrieben werden kann. An die Primär-Fluidführung 2 kann auch vor der Behandlungsstation 11 eine Abzweigleitung 40 angeschlossen sein, durch welche der abgetrennte Stickstoff einer weiteren, externen Verwendung zugeführt werden kann. Eine entsprechende Abzweigleitung kann auch an die Abströmleitung 25 angeschlossen sein, um wenigstens Anteile des zugehörigen Gasstromes einer externen Verwendung zuzuführen. Des weiteren kann der Abströmkanal 25 über eine Verbindungsleitung 42 unmittelbar mit dem Ausgang 7 verbunden sein, so daß wenigsten Anteile des zugehörigen Gasstromes unter Umgehung der Behandlungsstation 15 direkt dem Ausgang 7 zugeführt werden.

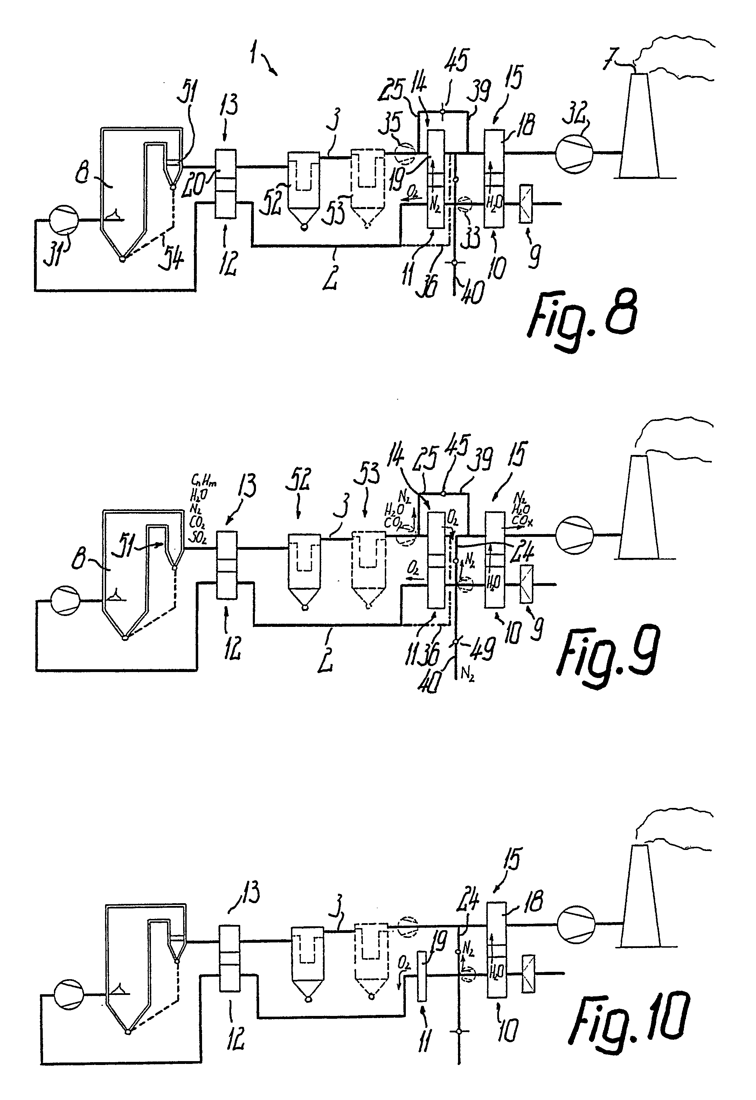

Die jeweils gewünschte Betriebsweise kann durch vollständiges bzw. teilweises Öffnen und Schließen von Ventilen 43 bis 50 eingestellt werden. In der Fluidführung 3 ist nach der Behandlungsstation 14 und der Rückführleitung 36 bzw. 37 sowie vor der Behandlungsstation 15 bzw. vor dem Anschluß der Abströmleitung 24 ein Ventil 43 vorgesehen. Ein weiteres Ventil 44 ist nach der Behandlungsstation 15 in der Fluidführung 3 vorgesehen. Ein Ventil 45 ist, ggf. nach der Abzweigleitung 41, in der Abströmleitung 25 vorgesehen, die ein weiteres Ventil 46 nach dem Anschluß an die Verbindungsleitung 42 und vor dem Rückführ-Anschluß an die Fluidführung 3 aufweist. In der Abzweigleitung 42 ist ebenfalls ein Ventil 47 vorgesehen. Ein weiteres Ventil 48 befindet sich in mindestens einer der Rückführleitungen 36, 37, 38 und schließlich sind Ventile 49, 50 in den Abzweigleitungen 40, 41 vorgesehen. Beim Betrieb gemäß Fig. 6 ist das Ventil 43 geschlossen, während die Ventile 44, 45, 46 und 48 geöffnet sind; die Ventile 47, 49, 50 können geschlossen bzw. mehr oder weniger geöffnet sein. Gemäß Fig. 7 kann zur Gastrennung als Gas-Trennmembran auch ein feststehendes Filter, vorzugsweise ein Großoberflächenfilter verwendet werden, wobei in diesem Fall auf den Enthalpie-Rückgewinn sowie die Regeneration dieses Behandlungskörpers 19 und auf die Rückführung des Rest-Sauerstoffes auf der Abluft verzichtet wird. Diese Behandungsstation 11 ersetzt die Behandlungsstationen 11, 14 gemäß Fig. 6, könnte ggf. aber auch zusätzlich vorgesehen und der Behandlungsstation 11 nach Fig. 6 nachgeschaltet sein. Der Betrieb in der Primär-Fluidführung 2 erfolgt ähnlich wie bei der Ausführungsform, nach Fig. 6, wobei die mit Sauerstoff angereicherte Luft in der Behandlungsstationen 12 auch im Sinne der beschriebenen Regenerationsverfahren regenerativ entfeuchtet, befeuchtet, adsorbiert und desorbiert werden kann. Das Ventil 43 der Sekundär-Fluidführung 3 ist in diesem Fall geöffnet, so daß der Abgasstrom nicht wie bei der Ausführungsform nach Fig. 6 vor und nach einer Behandlungsstation geteilt, sondern im wesentlichen unbehandelt der Behandlungsstation 15 und dann dem Ausgang 7 zugeführt wird. Mindestens eines der Ventile 45, 47 ist ebenfalls geschlossen. Durch entsprechendes Öffnen des Ventiles 46 kann wenigstens ein Anteil des in die Abströmleitung 24 geleiteten Stickstoffstromes unmittelbar dem Ausgang 7 zugeführt werden, wenn das Ventil 47 geöffnet ist. Außerdem kann ein Anteil des Abgasstromes vor der Behandlungsstationen 15 abgezweigt werden, wenn das Ventil 45 oder das Ventil 50 geöffnet ist. Schließlich kann durch Öffnen des Ventiles 49 ein Teil des durch die Behandlungsstationen 11 getrennten Stickstoffstromes über die Abzweigleitung 40 abgeführt werden.

Die Ausbildung nach den Fig. 8 bis 10 dient insbesondere zur Verbrennungslufttrocknung und zur Gastrennung mit Abgasreinigung. Mit einem hygroskopischen Stoff, vorzugsweise Phosphorpentoxid oder Magnesiumperchlorat, der auch katalytisch auf Kohlenwasserstoffe wirkt und zur Senkung der Reaktionstemperatur von Kohlenwasserstoffverbindungen zu verwenden ist, kann auch, ggf. in Verbindung mit Engoben-Glasurenn, Abgas behandelt werden, wobei vorzugsweise Kohlenwasserstoffverbindungen katalytisch getrennt werden können.

Gemäß der Erfindung wird bei der Verbrennung aller fossilen Brennstoffe Luft, die mit Sauerstoff angereichert bzw. primär um Stickstoff und Wassergehalt reduziert ist, so zugeführt, daß die Bildung von Stickoxiden und Ruß weitestgehend vermieden wird. Auch die Einrichtungen gemäß den Fig. 8 bis l8 können in einer einzigen Einrichtung zusammengefaßt sein.

Gemäß Fig. 8 wird die der Fluidführung 2 zugeführte atmosphärische Luft in den Behandlungsstationen 9, 10, 11 und 12 in der beschriebenen Weise gefiltert, entfeuchtet, entstickt und vorgewärmt, wonach sie in der Prozeß-Station 8 der Verbrennung zugeführt wird. Der in der Behandlungsstation 11 adsorptiv aufgenommene Stickstoff wird in der Behandlungsstation 14 wieder an das Abgas abgegeben. Der Sekundär-Fluidführung 3 können ein oder mehrere Abscheider 51, 52, 53 zugeordnet sein, die insbesondere zur Abscheidung von Feststoffen geeignet sind. Der Verbrennung ist zweckmäßig ein als Zyklon ausgebildeter Abscheider nachgeschaltet, der auch als Wärmetauscher ausgebildet sein kann. Dieser scheidet insbesondere Asche ab, die ggf. über eine Rückleitung 54 dem Brennraum zugeführt und dort bei entsprechend hohen Temperaturen eingeschmolzen wird, so daß sie sich leicht entsorgen läßt. Nach der Behandlungsstation 13 und vor der Behandlungsstation 14 bzw. dem Förderorgan 35 können ein oder mehrere Abscheider 52, 53 vorgesehen sein, mit welchen weitere Bestandteile, evtl. sich bildender Ruß, Asche, Schwefel u.dgl. abgeschieden werden können.

Zum Beispiel kann der Abscheider 52 als Elektrofilter oder als filternder Abscheider ausgeführt sein. Der Abscheider 53 kann fluor-, chlor- und schwefelsaure Reaktionsprodukte trocken oder naß zum Beispiel als gesonderten Gasstrom abscheiden. Die Behandlungsstationen 10, 15 bilden einen Regenerationstrockner, der nach dem Ljungström-Prinzip und auch als Wärmetauscher arbeitet. Die Behandlungsstationen 11, 14 bilden einen Außenluft-Gastrenner, ebenfalls nach dem Ljungström-Prinzip. Die Behandlungsstationen 12, 13 bilden einen Aufoxidator. Über die Abzweigleitungen 25, 39 und das Ventil 45 kann vor der Behandlungsstation 14 gereinigtes Abgas aus der Fluidführung 3 entnommen und nach Umgehung der Behandlungsstation 14 der Fluidführung 3 wieder zugeführt werden. Außerdem kann nach der Behandlungsstation 14 aus der Fluidführung 3 über die Abzweigleitung 40 Abgas entnommen werden. Diese Abzweigleitung kann aber auch für die Gasentnahme aus der Fluidführung 2 vorgesehen sein, wofür sie zweckmäßig zwischen den Behandlungsstationen 10, 11 angeschlossen ist.

Gemäß Fig. 9 arbeiten die Behandlungsstationen 11, 14 als Gas-Trennmembranen mit einer Permeabilität, die für Sauerstoff günstiger ist als für Stickstoff. Aus der Fluidführung 2 wird am Eingang in die Behandlungsstation 11 wenigstens ein Anteil des Stickstoff-Bestandteiles zurückgehalten und über die Abzweigleitung 24, in die ein weiteres Ventil eingeschaltet sein kann, der Eingangsseite der Behandlungsstation 15 zugeleitet und/oder über die Abzweigleitung 40 abgeführt. Die Behandlungsstationen 9 bis 12 arbeiten ähnlich, wie anhand Fig. 6 beschrieben. Aus dem in der Fluidführung 3 fließenden Abgasstrom, der nach Verlassen der Behandlungsstation 51 zum Beispiel Kohlenwasserstoff, Wasser, Stickstoff, Kohlendioxid, Schwefeldioxid usw. sowie feste Schwebeteilchen enthalten kann, wird an der Eingangsseite der Behandlungsstation 14 ein wesentlicher Anteil des Stickstoffes, des Wassers und des Kohlendioxides abgetrennt, der dann über die Abströmleitung 25 und die Abzweigleitung 39 bei offenem Ventil 45 an der Behandlungsstation 14 vorbeigeführt und dann zwischen den Behandlungsstationen 14, 15 wieder der Fluidführung 3 zugeführt wird. Der die Behandlungsstation 14 durchströmende Rest-Sauerstoff des Abgases wird über die strichpunktiert angedeutete Rückführleitung 36 nach der Ausgangsseite der Behandlungsstation 11 in die Fluidführung 2 zurückgeleitet. Mit dem nach der Behandlungsstation 14 in die Fluidführung 3 aus der Abströmleitung 24 eintretenden Stickstoff sowie mit dem um die Behandlungsstation 14 herumgeführten, gereinigten Gasgemisch wird die Behandlungsstation 10 regeneriert, d.h. insbesondere daß ihr das aufgenommene Wasser wieder entzogen wird.

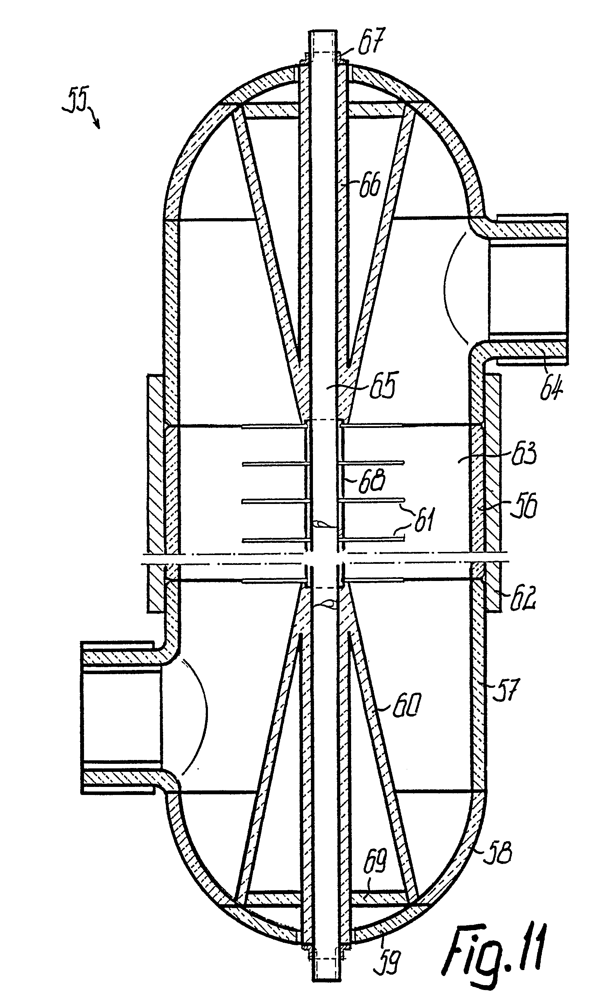

Bei der Ausführung nach Fig. 10 ist ähnlich derjenigen nach Fig. 7 die Behandlungsstation 11 durch einen statischen, nicht laufend einer Regeneration ausgesetzten Behandlungskörper 19 gebildet, weshalb auch hier in diesem Fall eine Behandlungsstation 14 in der Fluidführung 3 nicht vorgesehen ist. Der Behandlungskörper 19 wirkt als Gas-Trennmembran, so daß der nicht durchtretende Stickstoff-Anteil über die Abströmleitung 24 unmittelbar vor der Behandlungsstation 15 der Fluidführung 3 zugeführt wird und in der Behandlungsstation 15 das im Behandlungskörper 18 aufgenommene Wasser mitnimmt.

In Fig. 11 ist eine weitere Behandlungsstation 55 dargestellt, die insbesondere zur Rußabscheidung aus dem Abgasstrom bei Verbrennungsmotoren von Kraftfahrzeugen o.dgl geeignet ist. Alle beschriebenen Behandlungsstationen 9 bis 16, 51 bis 53 und 55 können auch jeweils für sich allein in einer Gasführung zweckmäßig vorgesehen sein und als durchströmten Behandlungskörper eine Kanalanordnung bzw. einen Wabenkörper der beschriebenen Art aufweisen. Außer durch die beschriebenen Behandlungsstationen bzw. mit diesen kann auch eine Abgas-Reinhaltung von Kohlenwasserstoffen, Kohlenoxiden, Ruß- und Schwefelbestandteilen erreicht werden, ohne daß die zum Beispiel bei Kraftfahrzeugen übliche Regelung durch eine Lambda-Sonde zur adsorptiven oder katalytischen Beseitigung dieser Schadstoffe erforderlich ist. Eventuell vorhandener Ruß wird aus dem Abgas mit der Behandlungsstation 55 elektrostatisch koaguliert und abgeschieden. Zweckmäßig wird durch Schwefeltrioxid, das im Abgasstrom enthalten ist, der elektrische Widerstand des Rußes herabgesetzt. Die vom Abgas beaufschlagten Teile bzw. Innenwandungen der Behandlungsstation 55 bestehen im wesentlichen ausschließlich aus keramischem Werkstoff, so daß Rußablagerungen an diesen Oberflächen keine Stromdurchschläge zwischen den Elektroden herbeiführen können. Der eigentliche Ruß- oder Staubionisator liegt innerhalb der elektrisch isolierenden Keramikkammer. Eventuell überschüssiges Schwefeltrioxid kann nach der Verbrennung und nach der Partikelabscheidung aus dem Abgasstrom mit Wasser kondensiert, adiabatisch ausgewaschen und/oder mit alkalischen Trockensubstanzen als schwefelsaures Trocken-Reaktionsprodukt ab- bzw. ausgeschieden werden.

Die Behandlungsstation weist ein bis auf einen Eingang- und einen Ausgang-Anschluß 64 im wesentlichen vollständig geschlossenes Keramikgehäuse auf, das aus keramischen und durch gemeinsamen Brand miteinander verbundenen Gehäuseteilen 56, 57, 58, 59 besteht. Zwischen den Enden ist mindestens ein zylindrischer Gehäuseteil 56 vorgesehen, an dessen voneinander abgekehrte Enden zwei gleiche Gehäuseteile 57 gleicher Weite stirnseitig anschließen, die jeweils an einem zylindrischen Mantel benachbart zu einer Stirnfläche einen nach außen gerichteten Stutzen als Anschluß 64 aufweisen. An die voneinander abgekehrten Stirnseiten der Gehäuseteile 57 schließt jeweils ein ringartig kugelkalottenförmiger Gehäuseteil 58 an, an dessen kleinere Ringstirnfläche ein kugelkalottenförmiger End-Gehäuseteil 59 anschließt. Dadurch ist ein, bis auf die Anschlüsse 64, im wesentlichen achssymmetrischer und zu seiner Mittelebene im wesentlichen symmetrischer hohler Baukörper geschaffen, der eine längliche, an ihrem Außenumfang zylindrisch sowie an ihren Enden kugelnapfförmig begrenzte Durchfluß- und Abscheide-Kammer 63 bildet.

In dieser Kammer liegen mit radialem Wandabstand zwei mit ihren verjüngten Enden gegeneinander gerichtete und im Abstand voneinander, hohle keramische, spitzkegelförmige Innenkörper 60, die mit ihren voneinander abgekehrten Enden an die Innenflächen der Kammerböden bzw. der Gehäuseteile 58 anschließen und dadurch sowie durch Stirnplatten gegenüber der Kammer 63 geschlossen sind. Jeder Innenkörper 60 weist einen innerhalb seiner Konuswandung im wesentlichen freiliegenden, einteilig vom verjüngten Ende ausgehenden, keramischen Hülsenansatz 66 auf, welcher im wesentlichen in der Kammerachse liegt und den zugehörigen Kammerboden bzw. Gehäuseteil 59 in einer Öffnung mit Spiel durchsetzt, jedoch gegenüber der Kammer 63 völlig abgedichtet ist. In die Hülsenansätze 66 ist ein die Kammer 63 durchsetzender metallischer Stab, wie ein Rohr, als Anschlußleitung 65 eingesteckt, die über beide Enden des Keramikgehäuses bzw. der Hülsenansätze 66 vorsteht und gegenüber deren Enden mit Überwurfmuttern 67 o.dgl axial lagegesichert ist. Zwischen den Innenkörpern 60, deren einander zugekehrte Enden etwa in den Ebenen der einander zugekehrten Stirnflächen der Gehäuseteile 57 liegen, sind auf der Anschlußleitung 65 elektrisch leitfähig mit dieser verbundene Sprühelektroden 61 in Form beispielsweise metallischer Ringscheiben aufgesteckt. Die Elektroden 61 werden mit keramischen Distanzhülsen 68 im Abstand voneinander gehalten, die ebenfalls auf die Anschlußleitung 65 aufgesteckt sind, so daß diese praktisch über ihre gesamte Länge gegenüber der Kammer 63 vollständig abgedeckt ist. Die äußeren Enden bzw. Umfangskanten der Elektroden 61 liegen im Abstand von der Innenwandung der Kammer 63 und werden über die Anschlußleitung 65 an den Plus-Pol einer Stromquelle angeschlossen. An der Außenseite ist das Keramikgehäuse wenigstens über einen Teilumfang und/oder über einen Teil seiner Länge von einem eng anliegenden Blechgehäuse 62 umgeben, das zum Beispiel durch ein auf den Außenumfang aufgestecktes Stahlrohr gebildet sein kann und sich nur zwischen den Anschlüssen 64 erstreckt. Dieses Blechgehäuse 62, das als Stoßschutz das Keramikgehäuse auch im wesentlichen vollständig umkleiden kann, dient als zweite Elektrode und ist an den Minus-Pol der Stromquelle anzuschließen. Sofern an einen oder beide Anschlüsse 64 ein metallisches Rohr zur Gasführung angeschlossen wird, kann statt dessen oder zusätzlich auch dieses Rohr den Minus-Pol angeschlossen werden. Für den Anschluß dieses Rohres sind am Innen- und/oder Außenumfang des jeweiligen keramischen Anschlusses 64 Dichtungen aus Keramikwolle o.dgl. vorgesehen.

Das zu entrußende Abgas eines Verbrennungsmotores, eines Heizbrenners o.dgl tritt zum Beispiel in den tiefer liegenden Anschluß 64 in die Kammer 63 ein, strömt nach oben an den Elektroden 61 vorbei und verläßt oberhalb von diesen die Kammer 63 durch den oberen Anschluß 64, der auf der vom unteren Anschluß abgekehrten Gehäuseseite liegt. Innerhalb der Kammer 63, die bis auf die Elektroden 61 ausschließlich von keramischen Oberflächen begrenzt ist, wird Ruß und/oder Staub durch Ionisation abgeschieden und koaguliert. Die Betriebstemperaturen können dabei so groß gewählt werden, daß das Abscheidungsprodukt nach und nach verbrannt und dann gasförmig durch den Ausgang weitergeleitet wird. Es ist auch eine Entsorgung durch Entleerung der Kammer 63 denkbar. Die erweiterten Enden der Innenkörper 60, die als Elektro-Isolatoren vorgesehen sind, sind zweckmäßig mit keramischen, ringscheibenförmigen Deckeln 69 verschlossen, welche den jeweils zugehörigen Hülsenansatz 66 eng umgeben und mit dem Außenumfang dicht an den Innenumfang des jeweils zugehörigen Innenkörpers 60 anschließen.

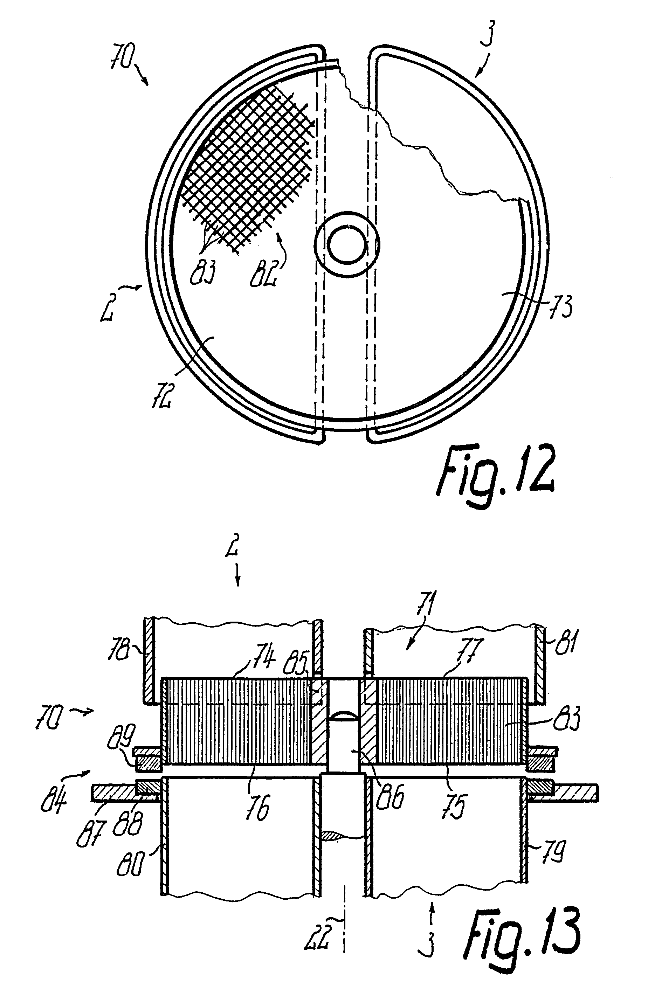

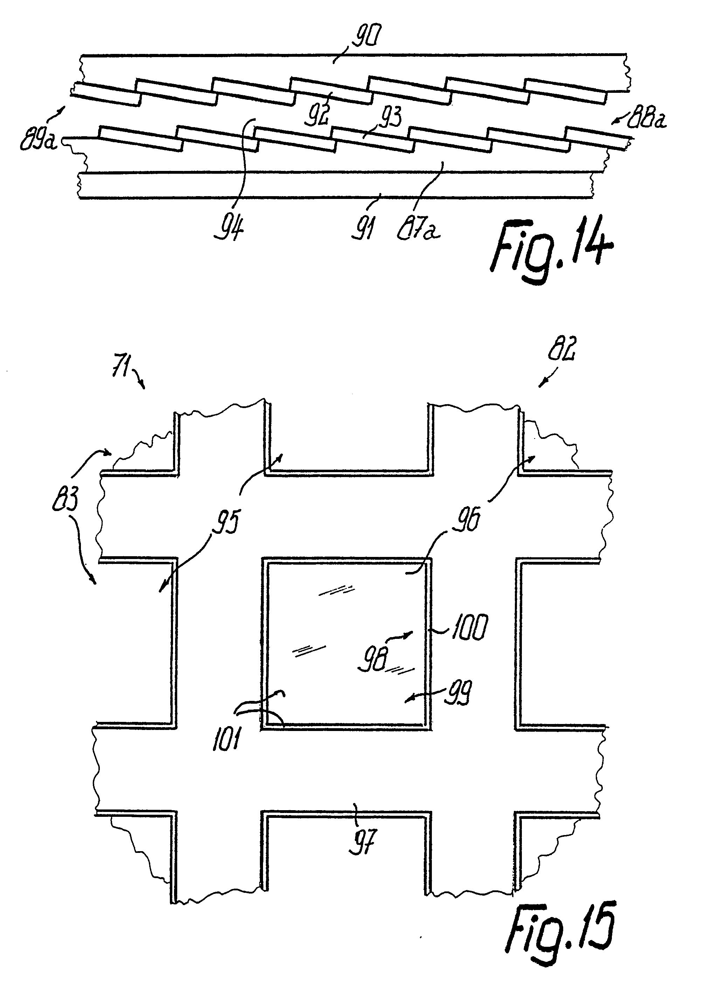

In den Fig. 12 und 13 ist eine Behandlungsstation 70 mit einem Behandlungskörper 71 dargestellt, dessen Ausbildung und Anordnung für jede beliebige der genannten Behandlungsstationen geeignet ist. Der in Axialansicht kreisrunde bzw. zylindrische Behandlungskörper 71 weist im wesentlichen rechtwinklig zu seiner Mittelachse liegende Stirnflächen auf und wird jeweils auf einem annähernd teilkreisförmigen Sektor 72 bzw. 73 einerseits von der Fluidführung 2 in einer Axialrichtung und andererseits von der Fluidführung 3 in der entgegengesetzten Axialrichtung durchströmt. Die beiden Sektoren 72, 73 können gleich groß oder unterschiedlich groß sein, im Abstand zueinander liegen oder auf jeder Seite des Behandlungskörpers 71 nur durch eine einzige, gemeinsame Trennwand der Fluidführungen 2, 3 voneinander getrennt sein und sie können in Axialansicht an ihren einander zugekehrten Seiten je nach Ausbildung der die Fluidführungen 2, 3 bildenden Kanalabschnitte geradlinig oder ineinandergreifend geschwungen, zum Beispiel S-förmig, begrenzt sein. Ein Sektor 72 bildet an einer Stirnseite des Behandlungskörpers 71 seinen Eingang 74 und an der gegenüberliegenden Seite seinen Ausgang 76, wobei der andere Sektor 73 seinen Eingang 75 an der vom Eingang 74 abgekehrten Stirnseite und seinen Ausgang 77 an der Stirnseite des Einganges 74 bildet. Zweckmäßig strömt das Gasgemisch in der Primär-Fluidführung 2 nach unten und in der Sekundär-Fluidführung 3 nach oben.

Die jeweilige Fluidführung 2 bzw. 3 ist im dargestellten Ausführungsbeispiel durch zwei an beide Stirnseiten des Behandlungskörpers 71 anschließende und den jeweils zugehörigen Sektor 72 bzw. 73 durch ihre Innenquerschnitte begrenzende, gesonderte Kanalabschnitte 78, 80 bzw. 79, 81 gebildet, die gegeneinander in Richtung der Drehachse 22 verstellbar und festsetzbar sein können. Anhand der Kanalabschnitte 78, 81 ist gezeigt, daß der jeweilige Kanalabschnitt den Behandlungskörper 71 am Außenumfang übergreifen und an diesem Außenumfang mit einer nicht näher dargestellten Dichtung, wie einer Labyrinthdichtung, anschließen kann. Anhand der Kanalabschnitte 79, 80 ist gezeigt, daß diese auch nur stirnseitig an den Behandlungskörper 71 anschließen können und dann im Bereich dieser Stirnseite eine entsprechende Abdichtung gegenüber dem Behandlungskörper 71 aufweisen, um zu erreichen, daß das gesamte, in der jeweiligen Fluidführung 2 bzw. 3 strömende Gas den Behandlungskörper an der zugehörigen Seite anströmt und nicht durch Lecks entweichen kann.

Der Behandlungskörper 71 weist eine sich annähernd über seine gesamten Querschnitte erstreckende Kanalanordnung 82 mit einer mehr- bzw. hochpotenzigen Anzahl von Einzelkanälen 83 auf, die im wesentlichen zueinander parallel sind und annähernd gleiche Querschnitte aufweisend. Benachbarte Kanäle 83 sind jeweils nur durch eine einzige Wandung voneinander getrennt. Im Falle der Ausbildung der Kanalwandungen als Molekularsiebe ist jeder Kanal 83 an einem oder beiden Enden auf voller Weite offen. Es ist aber auch denkbar, daß jeweils ein an einem Ende geschlossener und am anderen Ende offener Kanal 83 im wesentlichen nur an benachbarte Kanäle 83 anschließt, die ihrerseits im Bereich der anderen Enden im wesentlichen geschlossen und ansonsten im wesentlichen offen sind. Es ist zumindest statistisch jeweils eine Hälfte der Kanäle an den Eingängen 74, 75 geschlossen und an den Ausgängen 76, 77 offen. Im Falle der Ausbildung des Behandlungskörpers 71 als Gas-Trennmembran sind zweckmäßig im wesentlichen alle Kanäle 83 an mindestens einem Ende bzw. an derselben Stirnseite des Behandlungskörpers 71 mit einer spezifisch permeablen Membranschicht aus einem geeigneten keramischen oder anderen Werkstoff geschlossen. In diesem Fall können die Kanäle sehr kurz ausgebildet werden oder es kann auf die durch Formgebung hergestellten Kanäle ganz verzichtet werden, so daß die Kanäle dann nur durch die Material-Porosität der Membranschicht gebildet sind.

Zur Drehlagerung des Behandlungskörpers 71 ist zweckmäßig wenigstens ein zumindest teilweise berührungsfrei führendes Lager vorgesehen, das ein Axiallager und/oder ein Radiallager bilden kann. Beispielsweise ist eine druckgaspolsterte Lagerung denkbar, um einen möglichst leichtgängigen Betrieb zu gewährleisten. Dieser Betrieb kann vor allem auch mit einem Magnet-Lager 84 erreicht werden, das gemäß Fig. 13 unmittelbar anschließend an den äußersten Kranz der Kanäle 83 am Außenumfang des Behandlungskörpers 71 gleichmäßig verteilte Lagerelemente bzw. mindestens einen Lagerring aufweist. Am Umfang des Behandlungskörpers 71 ist ein Tragring befestigt, an dessen dem Lagerspalt zugekehrten Seite ein ringförmiger Magnet 89 angeordnet ist. Diesem liegt ohne Zwischenglieder ein ringförmiger Magnet 88 etwa gleicher Abmessung gegenüber, der zum Beispiel an einem ringförmigen Träger 87 befestigt und gegenüber einem Sockel bzw. einer Konsole der Einrichtung feststehend angeordnet ist. Der untere, feststehende Magnet 88 kann die beiden Kanalabschnitte 79, 80 eng anliegend umschließen. Es ist auch denkbar, die Magnete an den Stirnseiten des Behandlungskörpers 71 und der Kanalabschnitte 79, 80 einander gegenüberliegend anzuordnen. Die Magnete 88, 89 weisen an ihren einander zugekehrten Seiten den gleichen Magnetpol auf, so daß sie sich magnetisch abstoßen und im wesentlichen das gesamte Gewicht des Behandlungskörpers 71 so tragen, daß sie stets, bis auf einen Spaltabstand, berührungsfrei bleiben. Auch der Behandlungskörper 71 berührt dabei zweckmäßig im wesentlichen keinen der Kanalabschnitte 78 bis 81 oder andere Bauteile, so daß er völlig frei schwebend gelagert sein kann.

Im dargestellten Ausführungsbeispiel ist allerdings zur Zentrierung bzw. radialen Lagerung des Behandlungskörpers 71 ein eine Nabe 85 und einen Lagerzapfen 86 aufweisendes weiteres Lager vorgesehen. Die Nabe 85 ist zweckmäßig am Behandlungskörper 71 unmittelbar benachbart zu dessen innersten Kranz aus Kanälen 83 angeordnet ist. Der Behandlungs körper 81 ist gegenüber diesem Lager axial frei verschiebbar, so daß er Änderungen im Abstand zwischen den Magneten 88, 89 frei folgen kann. Auch das radiale Lager kann im wesentlichen reibungsfrei als berührungsfreies Lager einer der genannten Arten ausgebildet sein. Ist das Radiallager im Bereich des Außenumfanges des Behandlungskörpers 71 vorgesehen und zum Beispiel durch unmittelbare radiale Lagesicherung gegenüber zwei oder mehr Kanalabschnitten der Fluidführungen 2, 3 gebildet, so kann auf gesonderte Lagermittel zur Radiallagerung völlig verzichtet werden. Außerdem kann dadurch der Behandlungskörper 71 über seinen gesamten Querschnitt vom Außenumfang bis zur Mittelachse durchgehend mit Kanälen 83 versehen sein und die beiden Fluidführungen 2, 3 können durch eine einzige Querwand voneinander getrennt sein.

Die Magnete 88, 89 können Permanentmagnete und/oder regelbare Elektromagnete aufweisen. Zum Beispiel kann an der von mindestens einem Magnet 88 bzw. 89 abgekehrten Seite des zugehörigen Trägers mindestens ein ringförmiger Elektromagnet angeordnet sein, durch welchen die Axialabstoßung der Lager-Magnete verändert werden kann. Ferner ist es denkbar, die Axiallagerung und die Radiallagerung durch ein und dieselben Magnetkränze zu bewirken.

Bei der Ausführungsform nach Fig. 14, die eine Abwicklung in Radialansicht zeigt, sind die beiden Magnetkränze 88a, 89a jeweils durch eine Reihe von Einzelmagneten 92, 93 gebildet, die im Abstand, lückenlos oder einander überlappend in Umfangsrichtung aneinanderschließen. Die Einzelmagnete 92 bzw. 93 jedes Kranzes weisen ihre unterschiedlichen Pole an ihren in Umfangsrichtung aufeinanderfolgenden Enden auf. Benachbarte Enden zweier aufeinanderfolgender Einzelmagnete 92 bzw. 93 haben jeweils den gleichen Magnetpol haben. Die dem Lagerspalt zugekehrten, im wesentlichen ebenen Oberflächen der Einzelmagnete 92, 93 sind zweckmäßig unter einem Winkel von etwa 55° schräg zur Drehachse geneigt, so daß sich gezahnte Stirnflächen ergeben. Der Abstand zwischen den Polen jedes Einzelmagnetes 92 bzw. 93 ist innerhalb des jeweiligen Magnetkranzes 88a bzw. 89a gleich, jedoch im einen Magnetkranz um weniger als das Doppelte bzw. um weniger als die Hälfte größer als im anderen. Der größere Abstand kann etwa um ein Fünftel größer als der kleinere Abstand sein kann. Dadurch sind in dem Kranz mit kleineren Polabständen mehr Einzelmagnete als in dem anderen Magnetkranz angeordnet, wobei jeweils eine gerade Anzahl von Einzelmagneten zweckmäßig ist. Magnetkränze aus Einzelmagneten können auch koaxial ineinanderliegen sowie im Querschnitt um die Drehachse gekrümmt sein.

Ferner kann im Spalt zwischen Magnetkränzen, insbesondere zwischen koaxial ineinanderliegenden, hülsenförmigen Magnetkränzen, ein diesen Spalt im wesentlichen ausfüllendes Zwischenglied aus nicht leitfähigem Werkstoff, wie Glas, angeordnet sein. Zum Beispiel kann ein als solches Zwischenglied vorgesehenes Glasrohr in mehrere Lagerspalte von Behandlungskörpern eingreifen, die axial im Abstand voneinander liegen und ggf. gesonderten Behandlungsstationen zugeordnet sind. Alle diese Behandlungskörper können zur gegenseitigen Abstandseinstellung bzw. zur beschriebenen Veränderung des Strömungswiderstandes gegeneinander axial entlang des feststehenden Zwischengliedes verstellbar sein. Das rohrförmige Zwischenglied bildet einen über zwei oder mehr Behandlungsstationen ununterbrochen durchgehenden Kanalmantel der jeweiligen Fluidführung. Außerdem kann der dem Einrichtungssockel zugeordnete Magnetkranz, zum Beispiel der am Außenumfang des Zwischengliedes liegende Magnetkranz drehbar gelagert und mit einem Drehantrieb verbunden sein. Wird dieser äußere Magnetkranz angetrieben, so nimmt er berührungsfrei den am Behandlungskörper angeordneten Magnetkranz mit, da durch die beiden Magnetkränze eine Art Magnetkupplung gebildet ist.

Durch die beschriebene Ausbildung und insbesondere durch die keilartig schräg einander gegenüberliegenden Magnetfelder der Einzelmagnete ergibt sich eine besonders große Kippsicherheit und Leichtgängigkeit. Der Magnetkranz 89a wird zweckmäßig gemäß Fig. 14 nach rechts gerichtet so gegenüber dem anderen Magnetkranz 88a gedreht, daß sich seine Einzelmagnete 92 gegenüber den Einzelmagneten 93 in der Richtung bewegen, in welcher die Abstände der stirnseitigen Oberflächen der Einzelmagnete 92 von der Mittelebene des Lagerspaltes kleiner und die Abstände der Oberflächen der feststehenden, unteren Einzelmagnete 93 von dieser Mittelebene größer werden

In Fig. 15 ist ein Ausschnitt eines Behandlungskörpers 71 in wesentlich vergrößerter Darstellung gezeigt. Gemäß der Erfindung werden anorganische, vorzugsweise nichtbrennbare Mineralstoffe, zum Beispiel Zeolith, die als keramische Glasuren, Adsorbentien oder katalytische bzw. hygroskopische Stoffe auf mindestens einem Keramikträger angeordnet sind, verwendet. Zum Beispiel im Falle der Gastrennung tritt das stickstoffarme Verbrennungsluftgemisch aus einem Molekularsieb aus, das als Glasur bzw. Engoben-Beschichtung auf einem Wabenträger angeordnet ist. Auf dem Wabenkörper-Träger können aber auch membranartige Polymer-Materialien oberflächig und/oder zumindest über den lichten Durchgangsquerschnitt des jeweiligen Kanal es quer angebracht bzw. aufgebracht sein. Diese Materialien können in im wesentlichen gleicher Anordnung auch an einem Reinigungs-Katalysator bzw. Rußabbrandfilter angeordnet werden, um feuchte oder trockene Luft simultan speziell hinsichtlich des Stickstoffgehaltes zu verarmen. Bevorzugt wird der Luftsauerstoff vollständig vom Luftstickstoff getrennt.

Der Träger des jeweiligen Trockners bzw. Entfeuchters und/oder des Gastrenners bilden zweckmäßig monolithische Wabenkörper und können durch Wickeln, Extrudieren, Expandie ren oder Bearbeiten wenigstens eines brennbaren und/oder wenigstens eines unbrennbaren Ausgangs-Materiales hergestellt sein. Der Wabenkörper ist zweckmäßig unter Raumluft bzw. atmosphärischen Bedingungen formstabil, kann aber auch für extreme Bedingungen ausgebildet sein, wie sie zum Beispiel im Falle einer Gasturbine gegeben sind. Bei Formgebung durch Expandieren werden zum Beispiel aufeinanderliegende Vlieslagen in einem Raster punktförmig miteinander verbunden und dann quer zu ihren Ebenen auseinandergezogen, so daß zwischen benachbarten Vlieslagen die Kanäle gebildet sind. Des weiteren kann der Wabenkörper auch in der beschriebenen Weise im anionischen Oxidationsverfahren hergestellt werden. Die Metalloxid-Wandungen der Kanäle oder Oxidschichten, die sich an den Enden der Kanäle über die gesamte zugehörige Stirnfläche des Wabenkörpers bilden, können unmittelbar als Gas-Trennmembranen vorgesehen sein sollen. Die Kanalwandungen und/oder an diesen angebrachte Schichten als Trennmembran bzw. Molekularsieb wirken, so werden die Schichten, die sich an den Enden der Kanäle gebildet haben, zum Beispiel durch Abschleifen entfernt.

Insbesondere wenn der Wabenkörper durch Extrudieren hergestellt wird, wird er nach der Verfestigung durch Trocknen bzw. Brennen zumindest an seinen Stirnseiten, an welchen die Kanäle austreten, mit einem endlos umlaufenden Schneiddraht o.dgl beschnitten. Damit der dabei entstehende Schnittstaub nicht in die Lager u.dgl. der Trennmaschine eintreten oder unkontrolliert von der Schneidstelle abströmen kann, wird der Schneidvorgang im Tauchbad in einer Flüssigkeit, zum Beispiel Wasser, durchgeführt. Das Werkstück kann dabei feststehend im Tauchbad angeordnet sein, während mit dem endlosen Trenndraht bzw. dessen Lagerung die Vorschubbewegung durchgeführt wird. Dadurch kann auf Atemschutz, aufwendige Druckluftspülungen für die Lager der Trennmaschine und ähnliche Sicherungsmaßnahmen völlig verzichtet werden. Auch sind die Nachteile vermieden, die sich dann ergeben, wenn im Falle einer Druckluft-Lagerspülung ein Druckabfall erfolgt oder der Druckluft-Kompressor ausfällt. Ein weiterer Vorteil der erfindungsgemäßen Verfahrensweise liegt darin, daß das beim Schneiden anfallende Schneidmehl abgesiebt und zur weiteren Verwendung zurückgewonnen werden kann. Zum Beispiel kann das Schneidmehl als Schlempe über den gebrannten Wabenkörper gespült werden, so daß es dessen Poren füllt und dadurch seine Oberfläche glättet. Das Schneidmehl kann aber auch dem Materialschlick beigemengt werden, der als Ausgangsmaterial zur Herstellung weiterer Wabenkörper dient.

Die Kanalanordnung bzw. der Wabenkörper kann auch aus einem metallischen Grundkörper hergestellt werden. Dieser wird zunächst durch geeignete Formgebung oder durch Zusammensetzen einzelner, streifenartiger Bauteile hergestellt, die im Wabenraster an voneinander abgekehrten Längsseiten auf einen Teil ihrer Breite geschlitzt und dann zum Wabenkörper zusammmegesteckt werden. Diese Herstellungsweise kann außer für metallische Werkstoff, wie Stahl- oder Aluminiumlegierungen auch für andere geeignete, nichtmetallische Werkstoffe verwendet werden. Nach der Herstellung des Gitterrostes bzw. Grundkörpers wird auf diesen eine geeignete Metallischicht, zum Beispiel Nickel, insbesondere galvanisch aufgetragen. Dieser Auftrag erfolgt bei einem aus Blechstreifen zusammengesetzten und dadurch zunächst noch sehr formlabilen Gitterrost so, daß der aufgetragene Werkstoff die Streifen an ihren Kreuzungsstellen miteinander nach Art von Löt- oder Schweißverbindungen verbindet. Außerdem erfolgt der Auftrag so, daß benachbarte Kanäle, die zunächst noch im Bereich der Schlitzkanten undicht sind, gegeneinander vollständig abgedichtet werden. Durch. den als Befestigungs- und Dichtungs-mittel dienenden Auftrag wird der Gitterkörper formstabil bzw. sehr formsteif. Insbesondere wenn für den Grundkörper härtbarer Stahl verwendet wird, kann der Grundkörper nach dem Auftrag der zusätzlichen Metall-Schicht zum Beispiel bei etwa 600 °C gehärtet werden.

Die Beschichtung bildet, insbesondere wenn sie aus Nickel besteht, eine günstige Grundierung für viele weitere Materialien, die als weitere Beschichtung aufgetragen werden sollen, da diese Grundierung eine besonders gute Haftverbindung gewährleistet. Solche weiteren Beschichtungen können zum Beispiel im Plasmaverfahren aufgetragenes Porzellan, Zeolith, aber auch mehlige bzw. gemahlene Materialien, wie Aktivkohle sein. Dient die zusätzliche Beschichtung der selektiven Speicherung von Gasgemisch-Bestandteilen, so sind im wesentlichen alle Kanäle der Kanalanordnung zweckmäßig über ihre gesamte Länge ununterbrochen offen bzw. frei. Dadurch strömt das Gasgemisch in jeden einzelnen Kanal unabhängig von allen anderen Kanälen an einem Ende ein und am anderen Ende aus, wobei während des Durchströmens der entsprechende Bestandteil des Gasgemisches in der Beschichtung aufgenommen und gespeichert wird.

Des weiteren ist es möglich, die Kanalanordnung aus einem metallischen Grundkörper der genannten Art dadurch herzustellen, daß dieser Grundkörper anodisch oxidiert wird. Auch hier werden im Falle einer zusammengesteckten Gitterstruktur die einzelenen Gitterlamellen durch die entstehenden Oxidschichten im wesentlichen formstabil miteinander verbunden. Erfolgt die Oxidation nicht nur an den Oberflächen, sondern über die gesamte Dicke der Kanalwandungen so, daß alles vorhandene Metall in Metalloxid umgewandelt wird, ergibt sich wieder ein relativ formlabiler Körper, der zweckmäßig durch Brennen verfestigt wird, wobei eventuell zuvor keramische Zusätze eingelagert werden. In diesem Fall ist die hergestellte Kanalanordnung insbesondere zur Verwendung als Membran geeignet. Ein und dieselbe Kanalanordnung kann auch nach zwei oder mehr der beschriebenen Herstellungsarten hergestellt werden, wobei zum Beispiel einzelne Kanäle durch die eine und weitere Kanäle durch eine andere Herstellungs-art gewonnen werden oder Kanäle bzw. die Kanalanordnung durch in Längsrichtung aneinanderschließende Abschnitte gebildet sind, die nach unterschiedlichen Verfahren und ggf. aus unterschiedlichen Materialien hergestellt sind.

Wie Fig. 15 zeigt, können die Kanäle 83 im wesentlichen gleichmäßig rechteckigen bzw. quadratischen Querschnitt aufweisen. Sie können aber auch zumindest in Eckbereichen abgerundete, vollständig runde, polygonale oder unregelmäßige Querschnitte haben, die sich auch über die Länge der Kanäle ändern können. Zwischen benachbarten Kanälen ist jeweils eine im wesentlichen einteilige Kanal-Wandung 97 vorgesehen, wobei eine Vielzahl bzw. alle Kanal-Wandungen 97 des Behandlungskörpers 71 einteilig miteinander ausgebildet sein können, in Knotenbereichen aneinander anschließen und im Querschnitt eine Art Gitterstruktur bilden. Die Kanäle 83 bilden zwei Gruppen von Einzel-Kanälen 95, 96, die in möglichst gleichmäßiger Vermischung über den aktive bzw. durchlässigen Querschnitt des Behandlungskörpers 71 verteilt sind. Jeweils ein Einzel-Kanal der einen Gruppe ist von drei, vier oder mehr Kanälen der anderen Gruppe umgeben. Eine größere Anzahl der Kanäle 95, 96 einer oder beider Gruppen bzw. alle Kanäle der jeweiligen Gruppe sind jeweils an einer nur einen Teil ihrer Länge einnehmenden Stelle vollständig oder teilweise durch Verengung bzw. eine Querwand verschlossen. Der Verschluß kann eine Gas-Trennmembran 99, ein Molekularsieb oder eine für alle Bestandteile des Gasgemisches durchlässige Drossel bilden. Die im wesentlichen in einer gemeinsamen Ebene liegenden Verschlüsse der eine Gruppe von Kanälen liegen in deren Längsrichtung zweckmäßig im Längsabstand von den Verschlüssen der anderen Gruppe von Kanälen. Die beiden Gruppen von Verschlüssen können nahe bei den zugehörigen Endflächen des Behandlungskörpers 71 oder an diesen Endflächen liegen.

Außer an der jeweiligen Verschlußstelle weist jeder Kanal 83 über seine gesamte Länge durchgehend offene Innenquerschnitte auf. Dadurch bildet die Kanal-Wandung 97, die zwischen zwei benachbarten Kanälen 95, 96 liegt, zwischen diesen Kanälen eine quer zu deren Längsrichtung und zwischen deren Verschlüssen liegende Gas-Trennmembran oder ein Molekularsieb 98, das zeitlich aufeinanderfolgend entgegengesetzt quer durchströmt und dadurch zuerst gesättigt und dann wieder freigespült werden kann. Im dargestellten Ausführungsbeispiel sind die inneren Längsflächen einer größeren Teil-Anzahl einer oder beider Gruppen von Kanälen bzw. aller Kanäle der jeweiligen Gruppe, mit einer aufgebrachten Schicht 100 oder mit einer Beschichtung, wie einer Glasur, versehen, die die genannten inneren Längsflächen jedes Kanales zweckmäßig lückenlos abdeckt. Wird als Schicht 100 eine nachträglich durch Vakuum o.dgl. aufgebrachte Folie 101 verwendet, so kann die Schicht 100 sehr einfach einteilig mit dem jeweiligen Kanal-Verschluß bzw. mit der Membran 99 ausgebildet sein.

Kanal-Verschlüsse können auch dadurch hergestellt werden, daß nach Herstellung des Kanales eine Querwand aus einem formstabilen Werkstoff ein- bzw. angesetzt wird. Zum Beispiel können eine oder mehrere Wandungen des jeweiligen Kanales nach der Herstellung des Grundkörpers so am Kanalende abgewinkelt werden, daß sie den Verschluß bilden; ggf. ist die jeweilige Wandung zuvor seitlich einzuschlitzen, so daß sie eine Lasche bildet, die in einfacher Weise abgewinkelt werden kann. Handelt es sich dabei um einen metallischen Grundkörper und wird dieser danach in der beschriebenen Weise anodisch oxidiert, so werden die abgewinkelten Verschlußteile in der beschriebenen Weise gegenüber den benachbarten Wandungen lagegesichert und abgedichtet. Erfolgt die Oxidation über die gesamte Wandungsdicke des jeweiligen Verschlusses, so bildet dieser danach eine teilpermeable Membran aus dem entsprechenden Metalloxid.

Beim Betrieb des Behandlungskörpers 71 wird in einer Behandlungsstation ein Gasgemisch nur auf einem Teilsektor des Behandlungskörpers 71 in eine Gruppe von Kanälen 96 eingeleitet und zwar in deren offene Enden, die von ihren Verschlüssen entfernt liegen. Das in die Kanäle 96 eintretende Gasgemisch gelangt über die Wandungen 97 unter Trennung in die Kanäle 95 der anderen Gruppe und zwar nur in diejenigen der Kanäle 95, die auf dem zugehörigen Teilsektor des Behandlungskörpers 71 liegen. Statt dessen oder gleichzeitig kann das in die Kanäle 96 eintretende Gasgemisch auch unter Trennung die Verschlüsse der Kanäle 96 und/oder der Kanäle 95 durchströmen. Der getrennte Gasstrom tritt aus den Kanälen 95 und ggf. aus den Kanälen 96 an einer Endfläche des Behandlungskörpers 71 auf dem zugehörigen Teilsektor aus. Gleichzeitig wird auf einem anderen Teilsektor an dieser Endfläche des Behandlungskörpers 71, d.h. im Gegenstrom, ein anderes, geeignetes Gasgemisch, zum Beispiel ein regenerierendes Abgasgemisch, in die Kanäle 95 eingeleitet, die an dieser Endfläche offen und ggf. entfernt davon verschlossen sind. Von diesem Abgasgemisch durchströmen dann wenigstens einzelne oder alle Bestandteile im Gegenstrom die Kanalwandungen 97, nehmen ggf. die in diesen gespeicherten Gas-Bestandteile mit, gelangen in die Kanäle 96 und strömen an der anderen Enfläche des Behandlungskörpers 71 aus.

Der Behandlungskörper 91 wird in der beschriebenen Weise gleichzeitig so bewegt, daß seine beiden Sektoren kontinuierlich zwischen den beiden Gasströmen ausgetauscht werden. Dadurch durchläuft jeder Kanal 83 mit den zugehörigen Kanal-Wandungen 97 einen Gasstrom und darauffolgend den anderen Gasstrom. Diese Wandungen 97 werden so abwechselnd in zwei Zustände überführt, die zum Beispiel Speicherzustände sind, und von denen jeweils der eine Zustand eine Konditionierung für die im anderen Gasstrom gewünschte Wirkung darstellt.

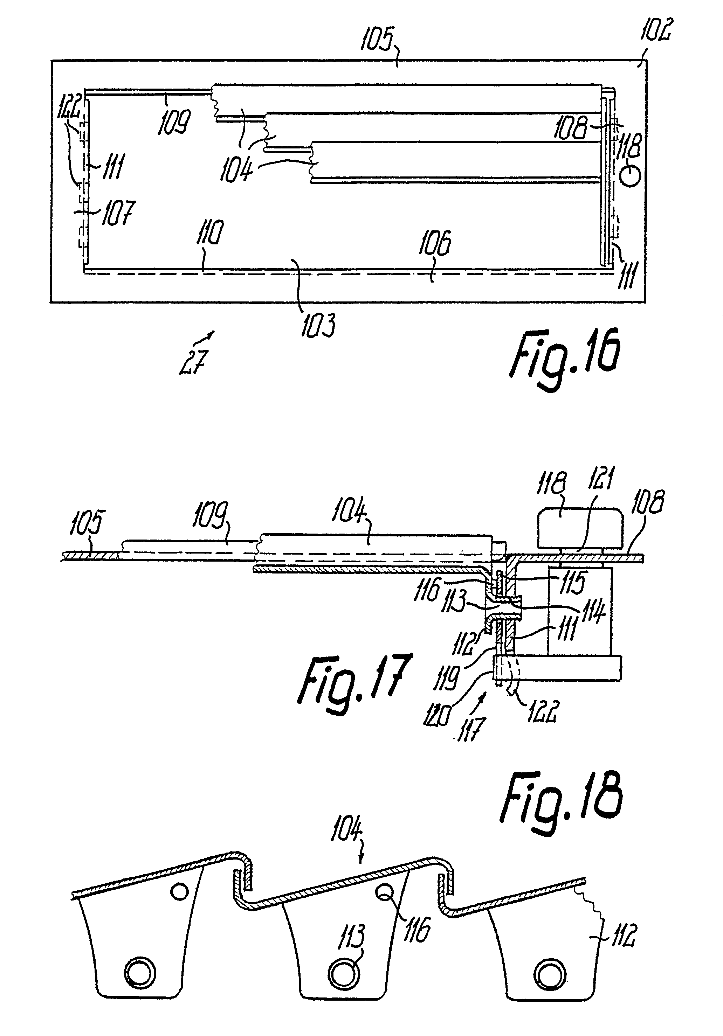

In den Fig. 16 bis 18 ist ein Lüftungsgitter 27 dargestellt, mit dem zum Beispiel, wie auch über die axiale Abstandsverstellung zwischen benachbarten Behandlungskörpern, der Druckverlust zwischen Einströmdruck und Ausströmdruck in einer Behandlungsstation eingestellt werden kann. Das Lüftungsgitter bzw. die zugehörige Abströmöffnung nimmt nur eine Teilfläche bzw. nur einen Teilumfang der Umfangsfläche des zugehörigen Kanalabschnittes ein. Mit dem Lüftungsgitter 27 können Abströmvolumina zusätzlich gesteuert bzw. geregelt werden. Dadurch können auch zu hohe Druckbelastungen, welche eventuell zum Bruch des ggf. filigranen Behandlungskörpers führen könnten, vermieden werden, weil das Lüftungsgitter nach Art eines Überlastventiles als Berstschutz nach für die Membran dienen kann. Über die Änderung des Abstandes zwischen benachbarten Behandlungskörpern kann durch Widerstandseinstellung vor allem das Gastrenn-Verhalten des Behandlungskörpers bei der Gastrennung eingestellt werden. Über den Abstand zwischen benachbarten Behandlungskörpern kann die Partial-Umfangsfläche bestimmt bzw. verändert und dadurch der genannte Durchström- bzw. Ausström-Druckverlust eingestellt werden. Bei der Partial-Umfangsfläche kann es sich um die Fläche der Umfangsbegrenzung des zugehörigen Kanalabschnittes zwischen benachbarten Behandlungskörpern und/oder um die Fläche des Sektors des jeweiligen Behandlungskörpers handeln, der von einer Fluidführung angeströmt wird. Die Größe dieses Sektors bzw. die Anzahl der jeweils einer Fluidführung zugehörigen Kanäle des Behandlungskörpers ist somit zweckmäßig stufenlos veränderbar.

Das Lüftungsgitter 27 weist einen zum Beispiel länglich rechteckigen Grundrahmen 102 mit parallel einander gegenüberliegenden und rechtwinklig aneinander anschließenden Rahmenzargen 105, 106, 107, 108 auf, die einteilig miteinander aus Blech ohne jegliche Schweißnaht ausgebildet sind und eine Rahmenöffnung 103 als zu durchströmende bzw. mehr oder weniger zu verschließende Öffnung begrenzen. Im Bereich die ser Rahmenöffnung 103 liegen zueinander und zu den längeren Rahmenzargen 105, 106 parallele Gitterlamellen 104 nebeneinander, die an den beiden anderen, kürzeren Rahmenzargen 107, 108 jeweils unabhängig voneinander um eine zur Rahmenebene sowie zu ihrer Längsrichtung etwa parallele Achse schwenkbar gelagert sind. Mit den Gitterlamellen 104, die sich jeweils annähernd über die gesamte Länge der Rahmenöffnung 103 erstrecken, kann die Rahmenöffnung 103 ganz oder teilweise geöffnet bzw. vollständig geschlossen werden. Zu diesem Zweck weist jede Gitterlamelle 104 an ihren voneinander abgekehrten Längskanten entgegengesetzt abgewinkelte Randstege auf, wobei im Schließzustand benachbarte Randstege von benachbarten Gitterlamellen 104 einander übergreifen. Entsprechende, miteinander einteilig ausgebildete Stege 109, 110 sind auch an den Innenkanten der Rahmenzargen 105, 106 vorgesehen und durch Randabwinkelungen dieser Rahmenzargen gebildet. Die beiden Stege 109, 110 stehen entgegengesetzt über die Rahmenzargen 105, 106 so vor, daß sie von den zugehörigen Randstegen der beiden benachbart zu ihnen liegenden Gitterlamellen 104 im Schließzustand in der beschriebenen Weise an ihren voneinander abgekehrten Seiten übergriffen werden können. Die Stege 109, 110 reichen jeweils über die gesamte Länge der Rahmenöffnung 103.

An den Innenseiten der Rahmenzargen 107, 108 sind ebenfalls einteilig miteinander bzw. mit den Stegen 109, 110 ausgebildete Stege als Lager-Stege für die Gitterlamellen 104 vorgesehen und durch nach derselben Seite abgewinkelte Randstreifen der Rahmenzargen 107, 108 gebildet. Jede Gitterlamelle 104 weist an beiden Enden schmalere und in derselben Richtung wie die Lager-Stege 111 abgewinkelte Blechenden 112 auf, aus denen jeweils ein nach außen vorstehender, hohlnietförmiger Lagerzapfen 113 einteilig herausgeformt ist. Die miteinander fluchtenden und gegenüber dem Hauptabschnitt der zugehörigen Lamelle querversetzten Lagerzapfen 113 jeder Gitterlamelle 104 sind in zwei miteinander fluchtende Bohrungen 114 der beiden Lagerstege 111 eingeklipst, die bei der Montage rückfedernd auseinandergedrückt werden können.

Zur synchronen Schwenkung aller Gitterlamellen 104 ist als Synchron-Leistenteil eine im wesentlichen flachstabförmig ausgebildete Steuerstange 115 vorgesehen, die wie die Gitterlamellen 104 aus dem gleichen Blechmaterial wie der Grundrahmen 102 besteht und zwischen den einen Blechenden 112 der Gitterlamellen 104 und dem zugehörigen Lager-Steg 111 liegt. Diese Blechenden 112 der Gitterlamellen 104 weisen jeweils einen nach außen vorstehenden, einteilig herausgeformten und in eine Bohrung der Steuerstange 115 eingreifenden Steuerzapfen 116 auf, der zwischen dem Lagerzapfen 113 und dem Hauptabschnitt der zugehörigen Lamelle 104 liegt sowie lediglich durch eine Steckverbindung in Eingriff mit der Steuerstange 115 gebracht ist. Die der Bewegungsübertragung zwischen benachbarten Gitterlamellen 104 dienende Steuerstange 115 ist in ihrer Längsrichtung parallel zur Rahmenzarge 108 bzw. zum Grundrahmen 102 verschiebbar zum Beispiel lediglich auf den Lagerzapfen 113 gelagert, die die Steuerstange 115 in einem oder mehreren Schlitzen durchsetzen.

Die Steuerstange 115 und damit die Gitterlamellen 104 werden über einen Stelltrieb 117 verstellt, der der Bewegungsübertragung zwischen einer Handhabe 118 und der Steuerstange 115 dient. Der Stelltrieb 117 weist eine Zahnstange auf, die durch einen einteiligen, gezahnten, mit vier Schlitzen versehenen Laschenvorsprung 119 an der inneren Längskante der Steuerstange 115 gebildet ist. In die Zahnung dieses Laschenvorsprunges 119 greift ein sich über einen Bogenwinkel von etwa 120 erstreckendes Zahnsegment 120 mit vier Zähnen ein, das um eine zur Rahmenebene rechtwinklige und an der Außenseite des zugehörigen Lager-Steges 111 liegende Achse drehbar in der Rahmenzarge 108 gelagert ist und an deren Innenseite bzw. benachbart zur inneren Längskante des zugehörigen Lager-Steges 111 liegt. Zur Lagerung durchsetzt ein im Durchmesser reduzierter Wellenabschnitt einer Welle des Zahnsegmentes 120 eine Lagerbohrung der Rahmenzarge 108. Auf den an der Außenseite der Rahmenzarge 108 liegenden Teil dieses Wellenabschnittes ist die Handhabe 118 drehschlüssig und axial gesichert aufgesteckt. Dadurch wird das Zahnsegment 120 durch den erweiterten Abschnitt der Welle 121 und die Handhabe 118 gegenüber der Rahmenzarge 108 axial gesichert. Durch Drehen der Handhabe 118 bzw. des Drehknopfes wird die Steuerstange 115 längsverschoben und alle Gitterlamellen 104 werden synchron zwischen einer zum Grundrahmen 102 etwa parallelen und einer dazu etwa rechtwinkligen Endlage geschwenkt.

Zur Verbindung der beschriebenen Teile des Lüftungsgitters 27 miteinander sind keinerlei gesonderte Verbindungs- oder Befestigungsglieder, wie Nieten, Schrauben, Schweißverbindungen o.dgl. erforderlich, da alle Bauteile ausschließlich durch Steckverbindungen miteinander verbunden sind. Das Lüftungsgitter 27 wird zur Befestigung bzw. zum Einbau in der Stelle, an der es verwendet werden soll, in einen an es angepaßten Ausschnitt eines Trägers, zum Beispiel einer Kanalwandlung so eingestreckt, daß es mit den Innenseiten seiner Rahmenzargen 105 bis 108 an einer Seite dieses Trägers anliegt und gegenüber dessen anderer Seite mit Sicherungsgliedern gesichert ist. Diese Sicherungsglieder sind in Form federnder Sicherungsklammern 122 an den inneren Längskanten der Lager-Stege 111, ggf. seitlich benachbarten zum Zahnsegment 120, vorgesehen und einteilig mit diesen Stegen 111 ausgebildet. Jede Sicherungsklammer 122 kann zum Beispiel laschenförmig über die Längskante des Steges 111 vorstehen und in Seitenansicht zur Außenseite der zugehörigen Rahmenzarge 107 bzw. 108 konvex gekrümmt sein, so daß sie eine gekrümmte Kufenfläche bildet, die beim Einschieben des Lüftungsgitters 27 durch die Begrenzung des Ausschnittes des Trägers von selbst federnd zurückgedrückt wird und dann in Sicherungslage springt. Dadurch kann das Lüftungsgitter 27 auch jederzeit ohne Werkzeug wieder gelöst werden, wobei durch die beschriebene Ausbildung gesonderte Befestigungsmittel zur Befestigung des Lüftungsgitters 27 nicht erforderlich sind.

## Ansprüche

1. Verfahren zur Behandlung, insbesondere zur selektiven Trennung von Bestandteilen eines Gasgemisches, wie Luft, mit Hilfe eines an einem Träger vorgesehenen Trennmittels, dadurch gekennzeichnet, daß das Gasgemish durch mindestens eine gebündelte Kanalanordnung (82) und Wandungen (97) von begrenzter spezifischer Permeabilität und/oder Speicherfähigkeit geleitet wird.

2. Verfahren nach Anspruch 1, dadurch gekennzeichnet, daß mit dem Gasgemisch Wandungs-Oberflächen angeströmt werden, die vorzugsweise wenigstens zum Teil durch im wesentlichen gleichförmig dicke Kanalwandungen (97) und/oder einen Wabenkörper (17 bis 21, 71) gebildet sind, daß vorzugsweise wenigstens ein Gasgemisch nur in eine erste Gruppe von Kanälen (96) der Kanalanordnung eingeleitet wird, daß mindestens ein Bestandteil dieses Gasgemisches in Kanalwandungen (97) aufgenommen und wenigstens ein weiterer Bestandteil nach Durchströmen der Kanalwandungen (97) der ersten Gruppe von Kanälen aus abwechselnd mit diesem gemeinsame Kanalwandungen (97) aufweisenden Kanälen (95) mindestens einer zweiten Gruppe herausgeleitet und der weiteren Verwendung zugeführt wird.

3. Verfahren nach Anspruch 1 oder 2, dadurch gekennzeichnet, daß das Gasgemisch vor Durchtritt durch mindestens eine zur Trennung vorgesehene Kanalanordnung (82) entfeuchtet, insbesondere zur Entfeuchtung durch eine weitere gebündelte Kanalanordnung geleitet wird, die ein Trocknungsmittel aufweist bzw. mit einem Trockenmittel und ggf. einem Binder zum Aufbringen des Trockenmittels auf die Wandungen (97) beschichtet und/oder imprägniert ist, daß vorzugsweise das Gasgemisch mindestens vor und/oder nach einer Gastrennung und/oder einer Entfeuchtung temperiert, insbesondere durch mindestens eine als Wärmetauscher dienende gebündelte Kanalanordnung (82) o.dgl. geleitet wird, daß vorzugsweise Luft zur und/oder nach einer Gastrennung mindestens teilweise von im Gasstrom vorhandenem Kohlendioxid befreit, insbesondere durch eine gebündelte Kanalanordnung geleitet wird, die mit einem speziell zur Abtrennung von Kohlendioxid geeigneten Molekularsieb und/oder Membran versehen ist und daß vorzugsweise aus Luft gewonnenes, mit Sauerstoff angereichertes Gas nach Durchtritt durch die zur Lufttrennung dienende gebündelte Kanalanordnung (82) einem Prozeß-System, wie einem Verbrennungssystem, einem Atmungssystem o.dgl. zugeführt wird.

4. Verfahren nach einem der vorhergehenden Ansprüche, dadurch gekennzeichnet, daß im Gasgemisch, insbesondere in einem Abgas des Verbrennungssystems vorhandener Ruß, insbesondere elektrostatisch durch Koagulieren in einem keramischen Rußabscheider (55) abgeschieden und dabei insbesondere sein elektrischer Widerstand durch Mitführen von Schwefeltrioxid reduziert bzw. der Ruß in einer Abscheidekammer gesammelt und/oder in einer gebündelten Kanalanordnung gefiltert und zu Kohlendioxid oxidiert wird bzw. daß vorzugweise im Gasgemisch, insbesondere in einem Abgas des Verbrennungssystems in Form von Schwefeldioxid und/oder Schwefeltrioxid vorhandener Schwefel in Form eines Sulfats abgeschieden wird, indem vorzugsweise die Schwefelabscheidung an einer gebündelten Kanalanordnung (82) erfolgt, die mindestens zum Teil, insbesondere im wesentlichen vollständig aus Carbonat und einem organischen Binder besteht und/oder mit einem Carbonat und ggf. einem Binder zum Aufbringen des Carbonats auf Wandungen (97) der Kanalanordnung (82) beschichtet bzw. imprägniert ist.

5. Verfahren nach einem der vorhergehenden Ansprüche, dadurch gekennzeichnet, daß wenigstens Teile der gebündelten Kanalanordnung (82) im Wechsel und insbesondere im Gegenstrom zur Regeneration der Kanalanordnung von unterschiedlichen Gasgemischen, wie Prozeß-Luft und Prozeß-Abgas durchströmt werden, daß vorzugsweise der Kanalanordnung (82) die Gasgemische auf zwei gesonderten benachbarten Sektoren (72, 73) simultan zugeführt werden, die relativ gegenüber und zwischen den Zuführungen, insbesondere kontinuierlich, lageverändert werden, daß vorzugsweise im wesentlichen gesondert voneinander strömende Gasgemische durch Wärmetausch temperiert werden und insbesondere wenigstens ein Teil mindestens einer Kanalanordnung (82) im Wechsel mit den Gasgemischen beaufschlagt und dadurch zwischen diesen ggf. auch ein Austausch des Wassergehaltes vorgenommen wird, indem das Wasser aus der Kanalanordnung (82) insbesondere mit Stickstoff ausgewaschen wird, der bei der Entstickung der Luft gewonnen wurde und daß vorzugsweise mindestens eine Kanalanordnung (82) während des Gasdurchtritts, insbesondere um eine zur Durchströmrichtung des Gasstroms im wesentlichen parallele Achse gedreht wird, indem vorzugsweise die Lagerstützung und/oder Drehbewegung mit Hilfe von Magnetkraft vorgenommen wird.

6. Verfahren nach einem oder vorhergehenden Ansprüche, dadurch gekennzeichnet, daß die Einstellung der stofflichen Zusammensetzung eines Prozeß-Abgases, insbesondere ohne dessen Messung, ausschließlich über eine Steuerung der stofflichen Zusammensetzung einer dem Prozeß zugeführten Prozeß-Luft und den Prozeß-Ablauf selbst erfolgt und/oder daß eine Stoff-Trenncharakteristik mindestens einer Kanalanordnung (82) durch Verändern eines Strömungs-Widerstandes benachbart zur Eingangs-und/oder Ausgangsseite der Kanalordnung (82) und/oder durch Verändern der Verweildauer der Kanalanordnung (82) im jeweiligen Gasgemischstrom eingestellt wird.

7. Einrichtung (1) zur Behandlung, insbesondere zur selektiven, mindestens teilweisen Trennung wenigstens eines Bestandteiles eines Gasgemisches, wie Prozeß-Luft, mit einem Einrichtungs-Eingang (4, 6) für das Gasgemisch, wie atmosphärische Luft, und mit einem Brauchgas-Ausgang (5, 7), zwischen denen in einer Fluidführung (2, 3) als Behandlungsstation (11, 14, 70) insbesondere eine Gas-Trennstation mit einem, vom Gasstrom zu beaufschlagenen Träger bzw. Behandlungskörper (19, 71) und einem diesem zugeordneten Gas-Trennmittel (98, 99) vor gesehen ist, insbesondere zur Durchführung des Verfahrens nach einem der vorhergehenden Ansprüche, dadurch gekennzeichnet, daß mindestens ein Träger wenigstens einer Behandlungsstation (9 bis 16, 70) mindestens teilweise als Behandlungskörper (17 bis 21, 71) mit einer gebündelten Kanalanordnung (82) versehen ist und Wandungen (97) von begrenzter spezifischer Gas-Permeabilität und/oder Speicherfähigkeit aufweist.

8. Einrichtung nach Anspruch 7, dadurch gekennzeichnet, daß mindestens ein Behandlungskörper (17 bis 21, 71) wenigstens einer Behandlungsstation (9 bis 16, 71) mindestens teilweise aus Keramik besteht und wenigstens auf einem Teil seiner Länge durchlässige und/oder an mindestens einem Ende permeabel geschlossene Kanäle (95, 96) aufweist, daß insbesondere mindestens ein Trennmittel (98, 99) wenigstens teilweise an permeablen Wandungen (97) der Kanäle (98, 99) der Kanalanordnung (82) festgelegt und der Behandlungskörper (17 bis 21, 71) insbesondere als Wabenkörper ausgebildet ist, daß vorzugsweise das Trennmittel wenigstens teilweise durch ein Molekularsieb (98), insbesondere in Form einer Engobenglasur und/oder wenigstens teilweise durch eine Gas-Trennmembran, wie eine polymere Kunststoffschicht (100) oder die Kanalwandung (97) selbst gebildet ist, daß vorzugsweise im wesentlichen der gesamte jeweilige Behandlungskörper durch eine gebündelte Kanalanordnung (82) gebildet ist und im wesentlichen alle Kanäle (95, 96) mit einem annähernd einheitlichen Trennmittel versehen sind, wobei insbesondere das Trennmittel als trennaktive Beschichtung (100) von Wandungen (97) der Kanäle (95, 96) und/oder als über den Durchlaßquerschnitt von Kanälen (95, 96) sich erstreckende Membranen (99) ausgebildet ist, die abwechselnd benachbarte Kanäle (95, 96) im Bereich voneinander abgekehrter En den verschließen und daß vorzugsweise mindestens ein Träger (17 bis 21, 71) eingangsseitig und/oder ausgangsseitig eine Gas-Trennmembran bildet, die insbesondere durch eine keramische, ggf. Kanäle der Kanalanordnung (82) verschließende Deckschicht gebildet ist.

9. Einrichtung nach Anspruch 7 oder 8, dadurch gekennzeichnet, daß der Gas-Trennstation (11, 14) mindestens eine insbesondere unmittelbar benachbarte Behandlungsstation (10, 13) zur Änderung des Feuchtigkeitsgehaltes, beispielsweise eine Entfeucht-Station und/oder eine Filterstation vorgeschaltet ist, die vorzugsweise an mindestens einem vom Luftstrom anzuströmenden Träger (18, 20), wie einer Kanalanordnung (82), ein Gas-Entfeuchtungsmittel, wie Phosphorpentoxid, Alumosilikate, Magnesiumperchlorat o.dgl. und/oder ein katalytisches Trennmittel für Kohlenwasserstoffe aufweist, daß vorzugsweise dem Brauchgas-Ausgang (5) vorgeschaltet und insbesondere der Sauerstoff-Stickstoff-Trennstation (11) nachgeschaltet in der Fluidführung (2) eine ggf. durch eine gesonderte Gas-Trennstation gebildete Trennstation für Kohlenoxid, wie Kohlendioxid, vorgesehen ist und daß vorzugsweise dem Brauchgas-Ausgang (5) vorgeschaltet und insbesondere der der Änderung des Feuchtigkeitsgehaltes dienenden Behandlungsstation (10) nachgeschaltet bzw. im Bereich der Gas-Trennstation (11) in der Fluidführung (23) mindestens ein Wärmetauscher angeordnet ist, der insbesondere von aus dem Brauchgas erzeugtem, rückgeführtem Prozeßgas temperiert ist und/oder daß mehrere Gas-Trennstationen hintereinander geschaltet sind, die zur Erhöhung des Trennungsgrades derselben Bestandteile und/oder zur Trennung unterschiedlicher Bestandteile vorgesehen sind.

10. Einrichtung, insbesondere nach einem der Ansprüche 7 bis 9, dadurch gekennzeichnet, daß, insbesondere als Wärmetauscher, mindestens eine gebündelte Kanalanordnung (82) vorgesehen ist, deren insbesondere perforierte Wandungen aus Stahl mit einer Plasmaporzellanbeschichtung bestehen.

11. Einrichtung nach einem der Anprüche 7 bis 10, dadurch gekennzeichnet, daß außer einer zwischen dem Einrichtungs-Eingang (4) für das Luft-Gasgemisch und dem Brauchgas-Ausgang (5) liegenden Primär-Fluidführung (2) eine Sekundär-Fluidführung (3) mit mindestens einem Prozeßgas-Eingang (6) und mindestens einem Reststoff-Ausgang (7) vorgesehen ist, daß die Sekundär-Fluidführung (3) insbesondere zur Regenertion durch mindestens einen Behandlungskörper (18 bis 20) der Primär-Fluidführung (2) und/oder unmittelbar nach einem Wärmetauscher durch mindestens einen Abscheider (52, 53, 55) für Ruß, Schwefel, Stickstoff, Fluor, Calcium, Magnesium, Natrium, Sauerstoff, Wasserstoff o.dgl. bzw. deren chemische Verbindungen geführt ist, daß vorzugsweise von einem in einer Prozeßgas-Fluidführung (3) vorgesehenen Sauerstoff-Abscheider mindestens eine Zuleitung (36) zur Brauchgas-Fluidführung (2) vorgesehen und insbesondere nach der Sauerstoff-Stickstoff-Trennstation (11) an die Brauchgas-Fluidführung (2) angeschlossen ist und daß vorzugsweise eine Umsteuereinrichtung zum wechselnden Anschluß wenigstens eines Teiles mindestens eines Behandlungskörpers (18 bis 21) an gesonderte Fluidführungen (2, 3) vorgesehen ist, wobei insbesondere eine Eingangs- und/oder eine Ausgangsseite des im wesentlichen kreisrunden Behandlungskörpers (18 bis 21) gegenüber zugehörigen benachbarten, kleineren Anschlußöffnungen mindestens zweier Fluidführungen (2, 3) drehbar bzw. mindestens ein Behandlungskörper (71) mit einer Lagerung (84) gegenüber einer Basis der Einrichtung (1) drehbar gelagert und einem Drehantrieb zugeordnet ist.

12. Einrichtung nach einem der Ansprüche 7 bis 11, dadurch gekennzeichnet, daß zwei oder mehr Behandlungsstationen (10 bis 16) jeweils mindestens eine gebündelte Kanalanordnung (82) mit wenigstens einem Behandlungsmittel, insbesondere mindestens einen in die Primär- und/oder die Sekundär-Fluidführung (2, 3) zwischengeschalteten Wabenkörper aufweisen, daß vorzugsweise mindestens eine Kanalanordnung (82) wenigstens im Bereich der Fluidführung im wesentlichen vollständig aus Keramik besteht, insbesondere als im wesentlichen monolithisch einteiliger, extrudierter, gestreckter, gegossener und/oder im anionischen Oxidationsverfahren hergestellter, formstabiler Behandlungskörper ausgebildet ist und daß bevorzugt Wandungen (97) wenigstens einer Kanalanordnung (82) eine Dicke zwischen 3/100 bis 30/100 mm, insbesondere von 5 bis 8/100 mm und/oder Kanäle (95, 96) wenigstens einer Kanalanordnung (82) eine lichte Weite zwischen 1/10 und 6 mm, insbesondere höchstens 3/10 mm aufweisen bzw. die Dicke mindestens einer Schicht (100) in der Größenordnung von 1/1000 mm und/oder die Länge der Kanäle (95, 96) zwischen 35 und 500 mm liegt.

13. Einrichtung, insbesondere nach einem der Ansprüche 7 bis 12, dadurch gekennzeichnet, daß wenigstens ein Lager einer Lagerung für einen Behandlungskörper o.dgl., insbesondere ein eine aufrechte Lagerachse (22) aufweisendes Axiallager als im wesentlichen berührungsfreies Schwebelager, wie als Magnetlager, ausgebildet ist, das insbesondere zwei einander durch im wesentlichen abstoßende Polanordnung im Abstand gegenüberliegende Magnet kränze (38, 39) aufweist, die vorzugsweise jeweils durch eine gezahnte bzw. geschuppte Aneinanderreihung von Einzelmagneten (92, 93) gebildet sind, welche in Umfangsrichtung abwechselnd im wesentlichen mit gleichen Magnetpolen aneinander schließen und/oder ein Drehantrieb mit mindestens einem Behandlungskörper im wesentlichen berührungsfrei, vorzugsweise über eine Magnet-Kupplung antriebsverbunden ist.

14. Einrichtung nach einem der Ansprüche 7 bis 13, dadurch gekennzeichnet, daß wenigstens eine Steuer- bzw. Regeleinrichtung (23) zur Änderung des Strömungswiderstandes bzw. der Druckverlustes im Bereich wenigstens einer Behandlungsstation mindestens einer Fluidführung (2, 3) vorgesehen ist, wobei vorzugsweise im wesentlichen achsgleiche Behandlungskörper (18 bis 20) benachbarter Behandlungsstationen (10 bis 12) gegeneinander zur Abstandsänderung verstellbar sind und/oder benachbart zu mindestens einem Behandlungskörper eine einstellbare Abströmöffnung (24, 25), wie ein Lüftungsgitter (27) mit verstellbaren Schließlamellen (104) vorgesehen ist.

15. Einrichtung, insbesondere nach einem der Ansprüche 7 bis 14, dadurch gekennzeichnet, daß ein in einer Prozeßgas-Fluidführung (3) vorgesehener Rußabscheider (55) eine mit Elektroden (61, 62) versehene Abscheidekammer (63) aufweist, deren Innenflächen bis auf Elektroden (61) im wesentlichen vollständig aus einem elektrisch isolierenden Werkstoff, insbesondere Keramik bestehen und/oder daß mindestens eine, insbesondere zur Schwefelabscheidung vorgesehene Kanalanordnung bzw. ein Behandlungskörper (21) wenigstens teilweise aus Carbonat besteht und/oder mit Carbonat beschichtet ist.

16. Einrichtung nach Anspruch 15, dadurch gekennzeichnet, daß die Wandung der Abscheidekammer (63) im wesentlichen über ihre Wandungsdicke aus demselben Isolier-Werkstoff besteht und insbesondere aus einzelnen Gehäuseteilen (56 bis 59) zusammengesetzt ist, daß vorzugsweise in der Abscheidekammer (63) mit Wandabstand mindestens ein Isolierkörper (60) angeordnet ist, der bis auf eine Anordnung von Elektroden (61) im wesentlichen alle übrigen stromführenden Teile bzw. Zuleitungen (65) annähernd vollständig gegenüber der Abscheidekammer (63) abdeckt und Elektroden frei ausragend trägt und daß insbesondere an der Außenseite der Wandung ein metallisches Blech-Gehäuse o.dgl. als weitere Elektrode (62) angeordnet ist.

17. Einrichtung nach einem der Ansprüche 7 bis 16, dadurch gekennzeichnet, daß der Brauchgas-Ausgang (5) und/oder der Prozeßgas-Eingang (6) für den Anschluß an eine Verbrennungs-Prozeßstation (8), wie einen Verbrennungsmotor, eine Gasturbine, einen Heizbrenner, einen Beleuchtungsbrenner o.dgl. ausgebildet ist.

18. Einrichtung nach einem der Ansprüche 7 bis 17, dadurch gekennzeichnet, daß der Brauchgas-Ausgang (5) und/oder der Prozeßgas-Eingang (6) für den Anschluß an eine Einrichtung zur Führung von Atemluft, wie eine Klimatisier-Einrichtung für Gebäuderäume, ein Atmungs- bzw. Beatmungsgerät o.dgl. ausgebildet ist.

19. Einrichtung, insbesondere nach einem der Ansprüche 7 bis 18, dadurch gekennzeichnet, daß ein Lüftungsgitter (27) mit einem einteilig aus Blech gestanzten Grund-und Tragrahmen (102) vorgesehen ist, das an den Begrenzungen einer Rahmenöffnung (103) abgewinkelte, einteilig mit dem Tragrahmen (102) ausgebildete Stege (111 bzw. 109, 110) zur Lagerung und/oder für den Schließeingriff von Gitterlamellen (104) aufweist, die vorzugsweise an abgewinkelten Blechenden (112) einteilig herausgeformte Lagerzapfen (113) für den Eingriff in Bohrungen (114) der zugehörigen Lager-Stege (111) aufweisen und/oder über eine gemeinsame Steuerstange (115) verstellbar sind, in deren gezahnten Laschenvorsprung (119) seitlich ein mit einer Handhabe (118) drehbares Zahnsegment (120) eingreift, wobei die Lager-Stege (111) vorzugsweise einteilig mit Sicherungsklammern (122) zur Sicherung des Lüftungsgitters (27) in einer Montageöffnung ausgebildet sind.

Fig.1

Fig.2

Fig.3

Fig.4

Fig.5

Fig.6

Fig.7

Fig. 8

Fig. 9

Fig. 10

Fig.11

Fig.12

Fig.13

Fig.14

Fig.15

Fig.16

Fig.17

Fig.18